# EUROPEAN PATENT APPLICATION

(11) **EP 4 224 438 A1**
(43) Date of publication of application: **09.08.2023**
(21) Application number: 23153576.6
(22) Date of filing: 27.01.2023
(51) Int. Cl.: G06V 20/58, G06V 10/62, G06V 20/40

(54) **APPARATUS, METHOD, AND SYSTEM FOR A VISUAL OBJECT TRACKER**

(30) Priority: 04.02.2022 FI 20225099
(71) Applicant: Nokia Technologies Oy, 02610 Espoo (FI)
(72) Inventor: LU, Ming, Hillsborough (US); HOSANGADI, Gurudutt, Hackettstown (US); JACOB, Jacquilene, Yonkers (US); SIEW, Aik Hua, Cupertino (US)
(74) Representative: Nokia EPO representatives

(57) **Abstract**

An approach is disclosed for real-time object tracking. The approach involves, for example, using a first object tracking mechanism to detect and associate one or more objects from frame to frame of a video. The approach also involves initiating one or more second object tracking mechanisms to track the one or more objects detected by the first object tracking mechanism from frame to frame of the video in parallel with the first object tracking mechanism. The approach further involves using a tracking output of the one or more second object tracking mechanisms in place of the first object tracking mechanism for a frame of the video based on determining that first object tracking mechanism has missed a detection of the object in the frame of the video.

## Description

### BACKGROUND

Today cameras are everywhere: surveillance systems, camera drones, factory automation cameras, smart phones, and so on. Cameras have been part of the lives of many end users to acquire visual information about the world. It is a very challenging task to locate single or multiple persons or objects of interest in videos from frame to frame across cameras in computer vision (e.g., due to potentially limited computing resources). Visual object tracking plays an important role, for example, in surveillance systems, traffic flow monitoring, autonomous driving, mobile robotics, and industry automation.

### SOME EXAMPLE EMBODIMENTS

Therefore, there is a need for a real-time, near real-time, or substantially real-time visual object tracker for processing videos or image sequences.

According to various example embodiments, an apparatus comprises means for using a first object tracking mechanism to detect and associate one or more objects from frame to frame of a video. The means are also configured to perform initiating one or more second object tracking mechanisms to track the one or more objects detected by the first object tracking mechanism from frame to frame of the video in parallel with the first object tracking mechanism. The means are further configured to perform using a tracking output of the one or more second object tracking mechanisms in place of the first object tracking mechanism for a frame of the video based on determining that first object tracking mechanism has missed a detection of the object in the frame of the video.

According to various example embodiments, a method comprises using a first object tracking mechanism to detect and associate one or more objects from frame to frame of a video. The method also comprises initiating one or more second object tracking mechanisms to track the one or more objects detected by the first object tracking mechanism from frame to frame of the video in parallel with the first object tracking mechanism. The method further comprises using a tracking output of the one or more second object tracking mechanisms in place of the first object tracking mechanism for a frame of the video based on determining that first object tracking mechanism has missed a detection of the object in the frame of the video.

According to various example embodiments, a non-transitory computer-readable storage medium having stored thereon one or more program instructions which, when executed by one or more processors, cause, at least in part, an apparatus to use a first object tracking mechanism to detect and associate one or more objects from frame to frame of a video. The apparatus is also caused to initiate one or more second object tracking mechanisms to track the one or more objects detected by the first object tracking mechanism from frame to frame of the video in parallel with the first object tracking mechanism. The apparatus is further caused to use a tracking output of the one or more second object tracking mechanisms in place of the first object tracking mechanism for a frame of the video based on determining that first object tracking mechanism has missed a detection of the object in the frame of the video.

According to various example embodiments, an apparatus comprises at least one processor, and at least one memory including computer program code for one or more computer programs, the at least one memory and the computer program code configured to, with the at least one processor, cause, at least in part, the apparatus to use a first object tracking mechanism to detect and associate one or more objects from frame to frame of a video. The apparatus is also caused to initiate one or more second object tracking mechanisms to track the one or more objects detected by the first object tracking mechanism from frame to frame of the video in parallel with the first object tracking mechanism. The apparatus is further caused to use a tracking output of the one or more second object tracking mechanisms in place of the first object tracking mechanism for a frame of the video based on determining that first object tracking mechanism has missed a detection of the object in the frame of the video.

According to various example embodiments, a system comprises one or more devices including one or more of a cloud server device, an edge device, an internet of things (IoT) device, a user equipment device, or a combination thereof. The one or more devices are configured to use a first object tracking mechanism to detect and associate one or more objects from frame to frame of a video. The one or more devices are also configured to initiate one or more second object tracking mechanisms to track the one or more objects detected by the first object tracking mechanism from frame to frame of the video in parallel with the first object tracking mechanism. The one or more devices are further configured to use a tracking output of the one or more second object tracking mechanisms in place of the first object tracking mechanism for a frame of the video based on determining that first object tracking mechanism has missed a detection of the object in the frame of the video.

According to various example embodiments, a device comprising at least one processor; and at least one memory including a computer program code for one or more programs, the at least one memory and the computer program code configured to, with the at least one processor, cause the device to use a first object tracking mechanism to detect and associate one or more objects from frame to frame of a video. The device is also caused to initiate one or more second object tracking mechanisms to track the one or more objects detected by the first object tracking mechanism from frame to frame of the video in parallel with the first object tracking mechanism. The device is further caused to use a tracking output of the one or more second object tracking mechanisms in place of the first object tracking mechanism for a frame of the video based on determining that first object tracking mechanism has missed a detection of the object in the frame of the video.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any 103 combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The various example embodiments of the invention are illustrated by way of examples, and not by way of limitation, in the figures of the accompanying drawings:
FIG. 1 is a diagram of a system capable of real-time object tracking, according to one example embodiment;
FIG. 2 is a signaling diagram for real-time object tracking, according to one example embodiment;
FIGs. 3A and 3B illustrate example architectures and processes for object tracking based on resource limitations, according to various example embodiments;
FIG. 4 is a diagram of the components of an object tracking system, according to one example embodiment;
FIG. 5 is a flowchart of a process for object tracking, according to one example embodiment;
FIG. 6 is a diagram illustrating an example neural network for object tracking, according to one example embodiment;
FIG. 7 is a diagram illustrating an example image grabber for object tracking, according to one example embodiment;
FIGs. 8A and 8B are example flowcharts for using video adapters for object tracking, according to various example embodiments;
FIG. 9 is a diagram illustrating state transitions of an image buffer, according to one example embodiment;
FIG. 10 is flowchart for operations of an image buffer in a "buffering" state, according to one example embodiment;
FIG. 11 is flowchart for operations of an image buffer in a "normal" state, according to one example embodiment;
FIG. 12 is flowchart for adaptive buffer management, according to one example embodiment;
FIG. 13 is a high-level flowchart for object tracking, according to one example embodiment;
FIG. 14 is a flowchart for a deep neural network (DNN)-based object detection service, according to one example embodiment;
FIG. 15 is a flowchart for feature extraction for object detection, according to one example embodiment;
FIG. 16 is diagram of outer tracking state transitions upon receiving an annotated frame, according to one example embodiment;
FIG. 17 is diagram of outer tracking state transitions upon receiving a plain frame, according to one example embodiment;
FIG. 18 is a flowchart for initiation of an active symbol, according to one example embodiment;
FIG. 19 is a flowchart for initiation of inner tracking for an active symbol, according to one example embodiment;
FIG. 20 is a flowchart of selection of target objects, according to one example embodiment;
FIG. 21 is a more detailed flowchart for real-time object tracking, according to one example embodiment;
FIG. 22 is a flowchart for testing bounding box estimated by inner tracking, according to one example embodiment;
FIG. 23 is diagram illustrating an example data association for mapping active symbols, according to one example embodiment;
FIG. 24 is a flowchart for pairing active symbols in a tracked sub-state with candidate instances for a greedy data association algorithm, according to one example embodiment;
FIGs. 25A-25C illustrate a flowchart of a greedy algorithm for associating active symbols in a tracked sub-state to candidate instances, according to one example embodiment;
FIG. 26 is a flowchart of a greedy algorithm for associating active symbols in a fragmented sub-state to candidate instances, according to one example embodiment;
FIGs. 27A and 27B illustrate a flowchart for management of inner trackers for active symbols in a tracked sub-state, according to one example embodiment;
FIG. 28 is a diagram of an example pixel-based motion algorithm for object tracking, according to one example embodiment;
FIG. 29 is a diagram of an example of switching flow for onboard versus cloud object detection and tracking using a network analyzer, according to one example embodiment;
FIG. 30 is a diagram of an example architecture for object tracking in a drone use case, according to one example embodiment;
FIG. 31 is a diagram of hardware that can be used to implement an embodiment; and
FIG. 32 is a diagram of a chip set that can be used to implement an embodiment.

### DESCRIPTION OF SOME EMBODIMENTS

Examples of a method, apparatus, and computer program for providing a real-time, near real-time, or substantially real-time visual object tracker are disclosed. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

As used herein, the term "real-time" refers to an object tracking result being produced within a designated time period (e.g., within milliseconds or other time period defined as real-time) of receiving an input (e.g., a video or image sequence depicting the object to be tracked). The term "near real-time" refers to providing an object tracking result within a time period greater than the time period designated as real-time but less than a second time duration (or less than a designated percentage above the designated time period). The term "substantially real-time" refers to providing object tracking results that meets the criteria for being classified as real-time by greater than a designated percentage of the time or number of instances of object tracking results.

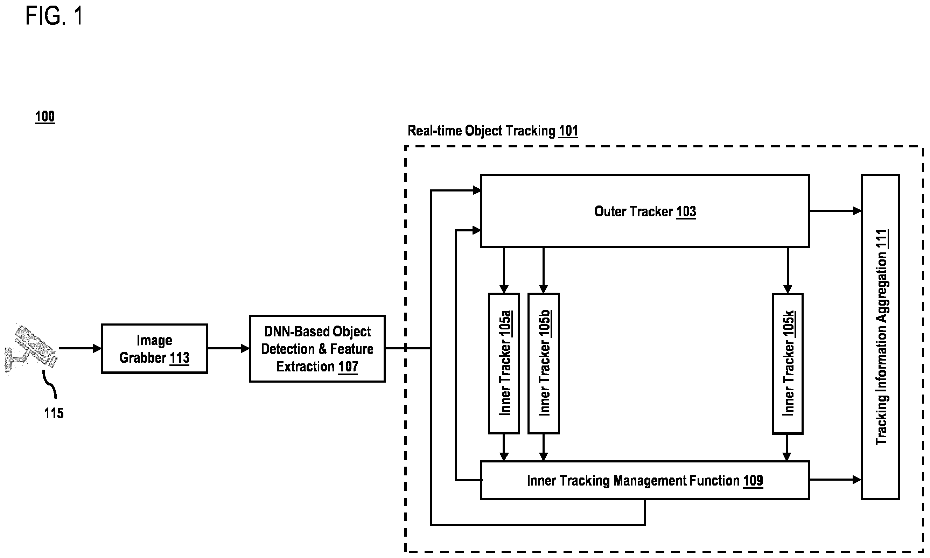

FIG. 1 is a diagram of a system, apparatus, and process 100 capable of real-time, near real-time or substantially real-time object tracking, according to various example embodiments. Visual tracking can be defined, for example, as the problem of estimating the paths or trajectories of one or more objects in an image plane as they move around a scene in a sequence of consecutive images or frames (i.e., videos). The goal of the task is to keep track of each object's motion, positioning, and occlusion. In some use cases, the one or more objects can be selected manually, automatically by defined/selected one or more object types or categories, or in combination. One example of an approach to a visual object tracking is based on, for instance, the tracking-by-detection paradigm. By way of example, there are two main steps in this approach:
(1) Step one is to detect each object of interest (e.g., find their locations and sizes in the image plane), and then
(2) Step two is to associate the detections of the objects from frame to frame (e.g., set up the object-to-object correspondences between/across frames).

With the great success of the deep learning based neural networks in object and feature detection/extraction, step one of the tracking-by-detection approach can use deep neural networks to detect and segment the objects depicted in the images of a video or image sequence. By way of example, it is contemplated that any type of neural network (or equivalent algorithm) available/capable for object detection (e.g., providing a bounding box around a detected object) and instance segmentation (e.g., providing contours around a detected object) can be used for tracking-by-detection. In one example, one or more frames of the video are processed by the object tracking system (e.g., the tracking-by-detection system) to identify object as a detection (e.g., a bounding box around the object as depicted in the image frame) and then associate the detection across different frames of the video. As used herein, the terms "tracklet" or "symbol" are used synonymously to refer to the detections of the same object across multiple frames of the video or image sequence or a related software object/data file that records the detections.

However, there are two potential technical issues with deep neural network (DNN) -based tracking-by-detection schemes. One issue occurs in the detection stage and is that deep neural networks may not be able to detect an object, such as one or more target objects, in some frames of the video with sufficient detection confidence (e.g., confidence above a specified threshold confidence). This can lead to the loss of tracking of the one or more target objects and/or fragmentation of tracklets. In other words, the DNN may not be able to detect a target object in one or more frames of the video with a target level of detection confidence such that no detection of the target object is reported.

Another issue is that the deep neural networks usually involve intensive computations and need powerful computing devices (e.g., devices with graphics processing units (GPU) or other hardware dedicated to machine learning tasks such as but not limited to neural processing cores, tensor cores, etc.). Because of these intensive computing requirements and/or lack of sufficient hardware to meet those requirements, tracking-by-detection processes can run slowly such that the processing pipelines may not achieve a desired/target frame rate (FPS) to achieve real-time object tracking (e.g., greater than 10 FPS, a frame rate of the video source, or any other specified frame rate associated with real-time tracking). The need to have this type of visual object tracking to perform in near real-time is important for many applications such as, but not limited to, surveillance, security, automation, traffic monitoring, product scanning, shopping scanning, indoor warehouse scanning, and/or similar applications for quick response.

The various example embodiments described herein provide an approach to real-time, near real-time or substantially real-time object tracking in videos or image sequences that addresses the technical problems described above of (1) missed-detection and (2) real-time issues for object tracking based on the tracking-by-detection paradigm. It is contemplated that the various examples described herein can be used for any object detection including but not limited to use-cases for robots/drones/vehicles as well as shopping, warehouse and/or manufacturing applications, e.g., object detection, counting, scanning, tracking, or any combination thereof. The applications of this invention can be extended to both indoor and outdoor use cases.

The various example embodiments described are based on considering that DNN-based object detection is powerful but can be susceptible to at least the two problems described above with respect to DNN-based tracking algorithms (e.g., object-detection imperfections and relatively low achievable frame rate). In other words, to apply deep neural networks to a real-time/near real-time/substantially real-time visual object tracking, the various examples described herein apply a flexible approach to dealing with the technical issues described above.

In one example, the system 100 of FIG. 1 solves the two technical problems of (a) missed-detection and (b) low FPS simultaneously by introducing a capability to provide real-time, near real-time or substantially real-time object tracking 101 that takes advantage of multiple complementary detection approaches (e.g., an outer tracker 103 in combination with one or more inner trackers 105a - 105k - also collectively referred to as inner trackers 105) to provide object tracking at higher frame rates (e.g., real-time, near real-time or substantially real-time frame rates of, for instance, greater than 10 FPS for real time or between 5-10 FPS for near real time). For example, the system 100 use one or more deep neural networks (e.g., a DNN-based object detection & feature extraction 107 that is an off-the-shelf or custom-trained object detector) and region of interest (ROI) tracking methods (e.g., inner trackers 105) through a tracking architecture including an inner tracking management function 109 and tracking information aggregation 111 (e.g., to aggregate tracking output from the outer tracker 103 and inner trackers 105) as shown in FIG. 1.

It is noted that DNN-based object detection & feature extraction 107 as the outer tracker 103 and ROI tracking as the inner trackers 105 are provided by way of illustration and not as limitations. It is contemplated that outer tracker 103 and inner trackers 105 can use any type of object tracking algorithm known in the art for either of the outer tracker 103 or inner trackers 105. For example, the outer tracker 103 can be a DNN with more layers with extensive training while the inner tracker 105 can be a DNN with fewer layers or different and/or less training than the outer tracker 103. More generally, in one example, the outer tracker 103 can be a finer object tracker that operates more slowly and/or with a greater field of view of the image while the inner tracker 105 can be a coarser object tacker, e.g., with narrower field of view of the image and/or lower image/frame resolution than the outer tracker, that operates more quickly, e.g. with higher frame rate than the outer tracker 103.

In one example, the system 100 also introduces of an image traffic throttling mechanism as part of an image grabber 113 to achieve desired/target frame rate from one or more video sources (e.g., a camera 115 and/or any other device capable of generating videos, images or image streams including any sources of synthetic, i.e. computer created, or real videos).

In one example, the interactions between the outer tracker 103 and the inner trackers 105 can boost object tracking performance. For example, the outer tracker 103 is responsible for associating detected objects of interest from frame to frame of a video, or across frames of a video, based on the objects' location information and discriminative features information generated by the deep networks (e.g., DNN-based object detection & feature extraction 107). The inner tracker(s) 105 are then used to search for the target object in case of missed detections by the outer tracker 103 either due to false negative errors (e.g., the object detector of the outer tracker 103 fails to detect target objects in the scene) or compute resource limitation (e.g., the DNN-based object detection & feature extraction 107 is running at lower frame rate than the desired/target frame rate or the frame rate being provided by the image grabber 113). In one example, the outer tracker 103 is based on the outputs of one or more deep neural networks 107 that are running, e.g., on GPUs or other neural processors at a lower FPS; and the inner tracking 105 is enabled based on fast and efficient ROI trackers that are running, e.g., on CPUs.

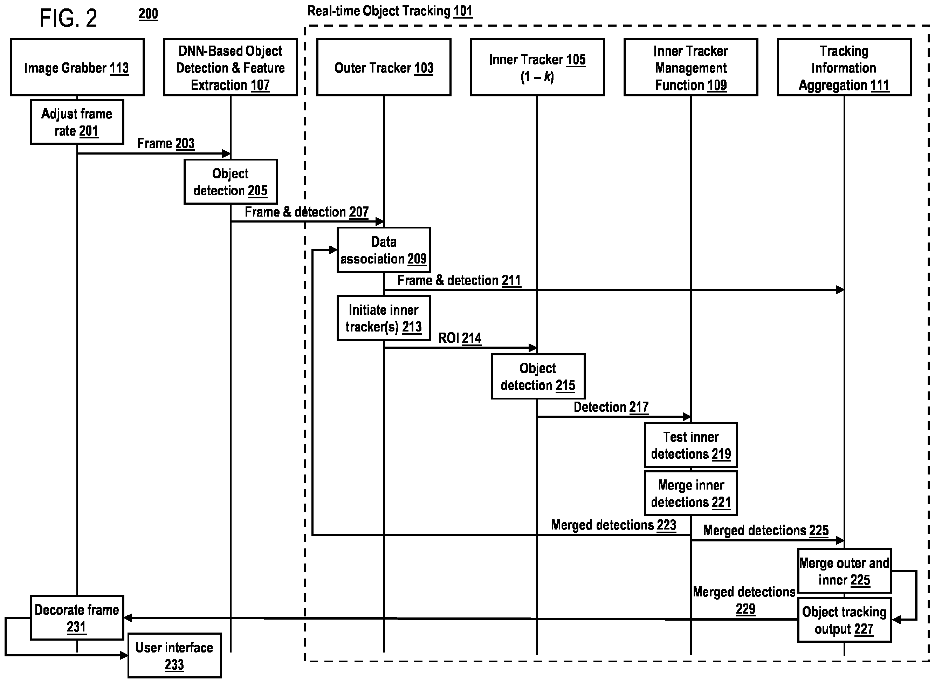

FIG. 2 is a time sequence diagram that illustrates a sequence of messages and processes 200 that represent processes/functions within the components and interactions of the components of FIG. 1 for real-time, near real-time or substantially real-time object tracking, according to various example embodiments. A message passed from one process to another is represented by horizontal arrows. A function performed by a process is indicated by a box overlapping the process at a time sequence indicated by the vertical position of the box or looping arrow. The processes represented in FIG. 2 are an image grabber 113, DNN-based object detection & feature extraction 107, outer tracker 103, inner trackers 105 (e.g., 1-K), inner tracking management function 109, and tracking information aggregation 111.

The time sequence diagram of FIG. 2 summarizes the object tracking process at a high level. Additional details of real-time object according to the various examples described herein are provided with respect to the figures further below.

At process 201, the image grabber 113 receives video from one or more sources (e.g., camera 115 such as a surveillance camera, drone, Internet of Things (IoT) device, or a synthetic source, such as a game server, virtual reality (VR) generator, augmented reality (AR) generator, etc.). The video from these sources may be at any frame rate which may not be consistent with the frame rate at which the object tracking system 101, e.g. the DNN-based object detection & feature extraction 107, is configured to operate. Accordingly, the image grabber 113 adjusts, if needed, the frame rate(s) of the incoming video to a target/desired frame. If the video sources have a higher frame rate than the target/desired frame rate of the object tracking system 101 and/or the DNN-based object detection & feature extraction 107, the image grabber 113 can throttle or otherwise down sample the frame rate to the target/desired frame rate. Conversely, if the video sources have a lower frame rate than the target/desired frame rate, the image grabber 113 can up sample the video to the target/desired frame rate. The image grabber 113 can then pass the frames of the video to the DNN-based object detection & feature extraction 107 at the target/desired frame rate in a signal 203.

At process 205, the DNN-based object detection & feature extraction 107 processes the input frame 203 to detect one or more target objects in the frame. The results of the detection is an annotated frame comprising the original frame along with a bounding box indicating the target object, any extracted features of the target object, associated confidences of the detections or any combination thereof. If the detection is successful (e.g., the detection confidence is above a threshold value), then the annotated frame can be passed in a signal 207 (e.g., frame and detection results) to the outer tracker 103. However, if the detection is unsuccessful (e.g., the detection confidence is below a threshold value, or the detection cannot be completed before an expiration of a designated timer or before arrival of another frame), then a plain frame (e.g., the original frame with no bounding box or extracted features of the target object) can be passed in the signal 207 to the outer tracker 103.

At process 209, the outer tracker 103 performs data association on the received frame and detection results 207 to correlate the detection of the same target object across multiple frames. The data associated frame and detection results, i.e. tracklets, are then passed to the tracking information aggregation 111 in a signal 211. In addition, at process 213, the outer tracker 103 uses the frame and detection results 207 to initiate one or more inner trackers 105 for one or more or each detected target object in the frame and detection results 207 that has been successfully associated to an existing tracklet or symbol. In one example, the outer tracker 103 initiates the inner tracker(s) 105 by passing the region of interest (ROI) information corresponding to the one or more, or each identified target objects in a signal 214 to respective inner trackers 105 (1 - *k*)*.* The ROI, for instance, can be based on the bounding box detected for each target object.

At process 215, the inner tracker(s) 105 associated with respective identified target objects uses the received ROI data 214 of the target objects to detect and track the target objects using, for instance, ROI trackers. The object detections of the inner tracker(s) 105 are passed to the inner management function 109 in a signal 217.

At process 219, the inner tracker management function 109 tests object detections 217 (e.g., bounding boxes) have correctly tracked the identified target object, i.e. inner detections. By way of example, the test can be based on a trained re-identification model or algorithm that determines whether the features (e.g., color, shape, etc.) of the target object in the inner detections 217 match the features of previously tracked instances of the same object. In addition, the test can include, but is not limited to, using a motion model to predict the location of the target object in different frames to determine whether the location of the target object in the inner detections 217 match within specified criteria. If the inner detections 217 fail to meet tests such as, but not limit to, the tests described above, then the inner detections 217 is determined to be invalid. Otherwise, the inner detections 217 is classified as valid.

At process 221, the inner tracker management function 109 merges together the inner detections 217 that remain after the detection validity test(s) of process 219. For example, the inner detections 217 can include separate detection results for each target object that has been separately tracked by the respective inner trackers 105 (1 - *k*)*.* The inner tracker management function 109 then merges these separate detections from different ROIs to the same frame so that the merged detections represent all targets detected by any of the multiple instances of the inner tracker 105. The inner tracker management function then passes the merged inner detections resulting from the process 221 back to the outer tracker 103 (e.g., for data association according to the process 209) in a signal 223 and/or to the tracking information aggregation 111 in a signal 225.

At process 225, the tracking information aggregation 111 merges the outer tracking data (e.g., received in signal 211) with the inner tracking data 225 for a processed frame. In one example, merging of the outer and inner tracking results comprising using the outer tracking result for a target object in the frame if the target object has been detected by the outer tracker 103 with a confidence above a threshold confidence. If the confidence is not above the threshold confidence or if the outer tracker 103 has not provided a valid result (e.g., because the detection process timed out or the outer tracker 103 missed the frame), then the inner tracking result instead of the outer tracking result is used in the object tracking output 227.

In one example, the tracking information aggregation 111 uses the object tracking output 227 to update the tracklet or symbol for the targe object. In addition or alternatively, the tracking information aggregation 111 can pass the outer-inner merged detections of the object tracking output 227 to back to the image grabber 113 in a signal 229.

At process 231, the image grabber 231 uses the out-inner merged detections 229 to decorate the corresponding frame with representations of the bounding box(es) associated with the tracked target objects. As used herein, a decorated frame refers to a frame that includes a visual rendering of the bounding boxes of the detected target objects. For example, by decoration, the original frame or image is overlaid with the corresponding detection and tracking information by plotting the bounding boxes and identifiers for the objects being tracked in the frame. In this way, the detection and tracking results can be easily visualized. The decorated frame is then sent to the user interface 233 (e.g., a web-based user interface dashboard) to display the decorated frame. In this way, a user monitoring the real-time object tracking process is presented with a visual representation of the object detections.

In summary, the various examples described here provide for at the following features:
- An image traffic throttling mechanism (e.g., via the image grabber 113);
- The flexibility in achieving desired FPS (e.g., via the image grabber 113);
- The outer tracking mechanism 103 based on deep-learning networks (e.g., DNN-based object detection & feature extraction 107) or equivalent;
- The inner tracking mechanism 105 based on light-weight region-of-interest trackers or equivalent; and
- The interactions between the outer tracker 103 and the inner tracker 105.

In one example, it is contemplated that the system, apparatus and process 100 and/or the real-time object tracking 101 can be implemented in any type of device including but not limited to a cloud-based server, an edge device (e.g., computer, mobile device, mobile communication device, vehicle, etc.), and IoT device (e.g., embedded real-time object tracking 101 in a camera equipped IoT or sensor device). As used herein an IoT device refers to physical devices with connectivity to the Internet or any other data network/communication system. IoT devices, for instance, have built-in/embedded processing capabilities along with supporting sensors, software, firmware, circuitry, and/or the like to implement functions such as but not limited to real-time object tracking 101. Each of these devices can have different combinations of CPUs, GPUs, neural processing cores, tensor cores, cameras (or any other video sources), and/or the like to perform one or more functions of the real-time object tracking 101.

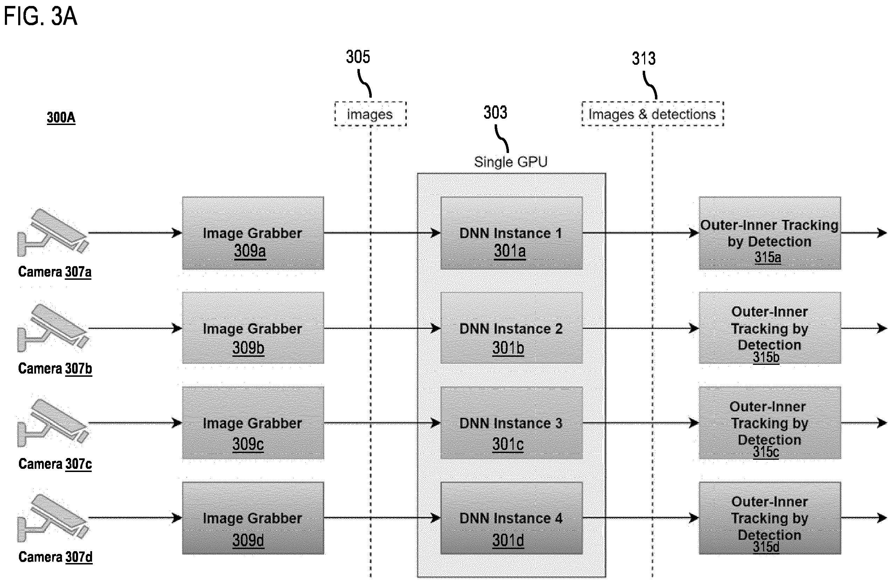

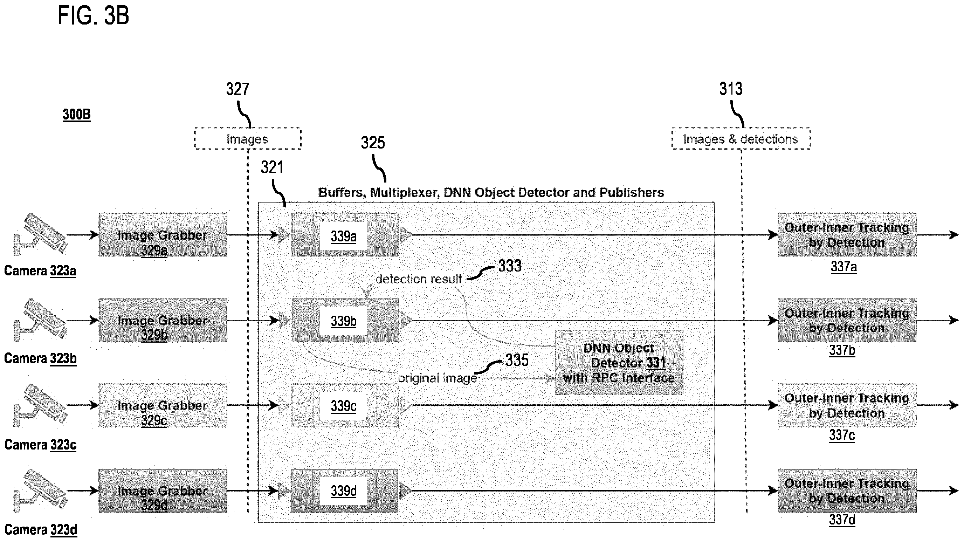

For example, in the case of multiple cameras with limited GPU resources, the example tracking pipeline architecture (e.g., the real-time object tracking 101) of the various example embodiments described herein can be used to achieve higher frame rates. FIGs. 3A and 3B show two use cases of the invention when GPU resources are limited, according to various example embodiments.

In the example architecture and process 300A of FIG. 3A, multiple DNN instances 301a-303d are loaded into a single GPU device 303 due to GPU resource limitation. If any of the DNN object detectors (e.g., DNN instances 301a-301d) is unable to process an image (e.g., images 303 from respective cameras 307a-307d forwarded by respective image grabbers 309a-309d) within a required delay, the original image will be also forwarded with no detection (e.g., images and detections 311) to the next stage in the pipeline and used to drive the inner trackers (e.g., outer-inner tracking by detection 313a-313d which are instances of the real-time object tracking 101).

In the example architecture and process 300B of FIG. 3B, one DNN instance 321 is shared by multiple cameras 323a-323d due to a processor, e.g. a GPU, resource limitation, e.g. one processor. A round-robin multiplexer 325 takes the most recent frame (e.g., images 327 provided by respective image grabbers 329a-329d) received from the cameras 323a-323d and sends it to the DNN object detector 331 for inference via, e.g., a RPC (Remote Procedure Call) and then attaches the detection result 333 to the original image 335 for publication before it is delivered/sent to the next stage in the pipeline and used to drive the inner trackers (e.g., outer-inner tracking by detection 337a-337d which are instances of the real-time object tracking 101). In some examples, the detection result 333 goes to a related buffer 339x as long as the corresponding frame is still in the related buffer 339x. If the detection result 333 arrives before the corresponding original frame is delivered from/sent out from the buffer 339x, it will be sent to the next stage together with the original image. Otherwise, the detection result will be discarded silently. In one example, a length of double-end queues 339a-339d is chosen based on the average inference time of the DNN object detector 331 in use. The double-ended queues 339a-339d, for instance, buffer incoming images 327 from respective cameras 323a-323d until they can be processed and annotated with respective detection results 333.

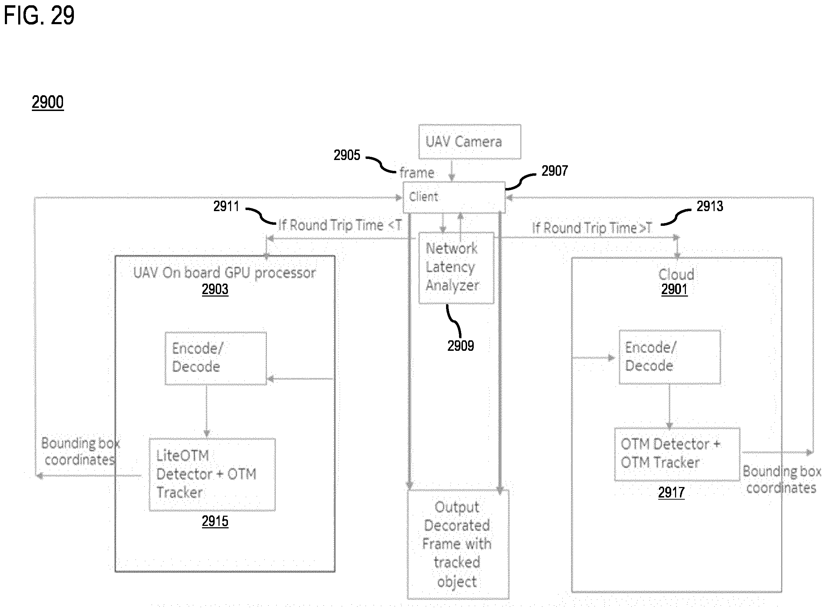

In addition, in one example, the architecture of the real-time object tracking 101 can include an automatic switch from cloud-based architecture to an embedded on-board architecture based on the objects of interest or region of interest to be detected and tracked and the network availability as explained in further detail with respect to FIG. 29 below.

In yet another, the system 100 of FIG. 1 also enables a modular architecture pipeline to enable customization based on specific use-cases. For example, the object detector can be swapped for a customized trained model for a specific task and the same for the object tracking system 101. The customized object detector may be based on images from an RGB camera or a different sensor such as thermal, hyperspectral or IR (infrared) cameras. Such customization is also supported by the automated switch of detector and tracker on the cloud to on-board hardware for processing..

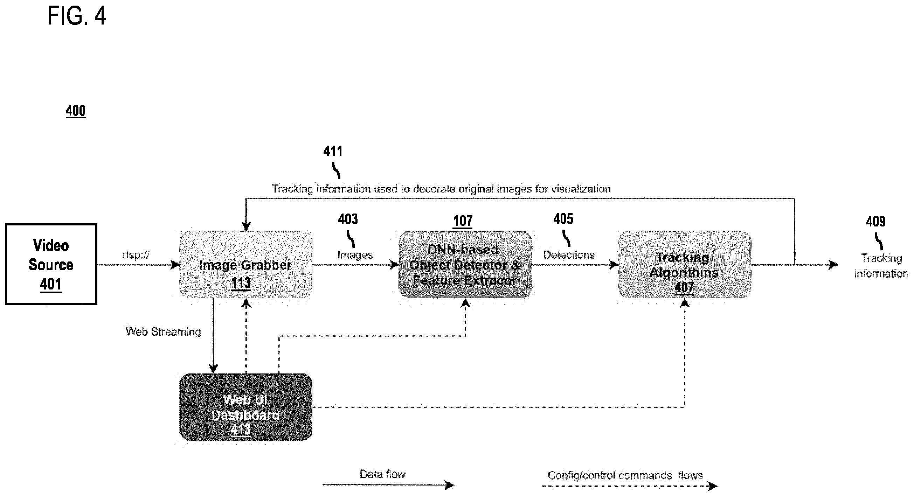

As shown in FIG. 4, in various example embodiments, a DNN-based visual tracking system 400 according to the various example embodiments described above (e.g., the real-time object tracking system 101) , for example, has the following logical units, i.e. software and/or hardware units (e.g., some of which are described in FIG. 1):
- Video source 401, e.g., a camera 115 or other sensor capturing live video and/or a rendering engine, for providing synthetic video (e.g., artificially and/or software generated videos or image sequences such as game, augmented reality (AR) and/or virtual reality (VR) streams and/or environments) via devices, such as drones, surveillance cameras, IoT devices, game units/servers, augmented reality (AR) unit/server and/or virtual reality (VR) unit/server etc. or any combination thereof - to provide raw video or image sequences of target objects to track;
- Image grabber 113 - to provide images 403 from the video source 401 at an adjusted frame rate for tracking;
- Neural networks (e.g., DNN-based object detection & feature extraction 107 or equivalent) - to process the images 403 to detect target objects as detections 405 (e.g., region of interest (ROI), bounding boxes, associated confidence of detection, feature extractions, masks, etc.);

- Tracking algorithms 407 (e.g., the real-time object tracking 101 based on interactions between the outer tracker 103 and inner tracker(s) 105) - to correlate detections 405 across frames of the video and generate tracking information 409 (e.g., tracklets or symbols) for output as well as tracking information 411 that can be used by the image grabber 113 to decorate original images for visualization and/or adjusts, if needed, the frame rate(s) of the incoming video to a target/desired frame; and
- Web User Interface (UI) and Dashboard 413 - to visualize real-time object tracking such as by rendering detected bounding boxes in real time.

It is contemplated that the functions of the components of the real-time object tracking system 101 described above may be combined or performed by other components or means of equivalent functionality. The above presented components or means can be implemented in a circuitry, a hardware, a firmware, a software, a chip set or a combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In another example, one or more of the modules 301-309 may be implemented as a cloud-based service, local service, native application, or combination thereof. The functions of the real-time object tracking system 101 and its components are discussed with respect to figures below.

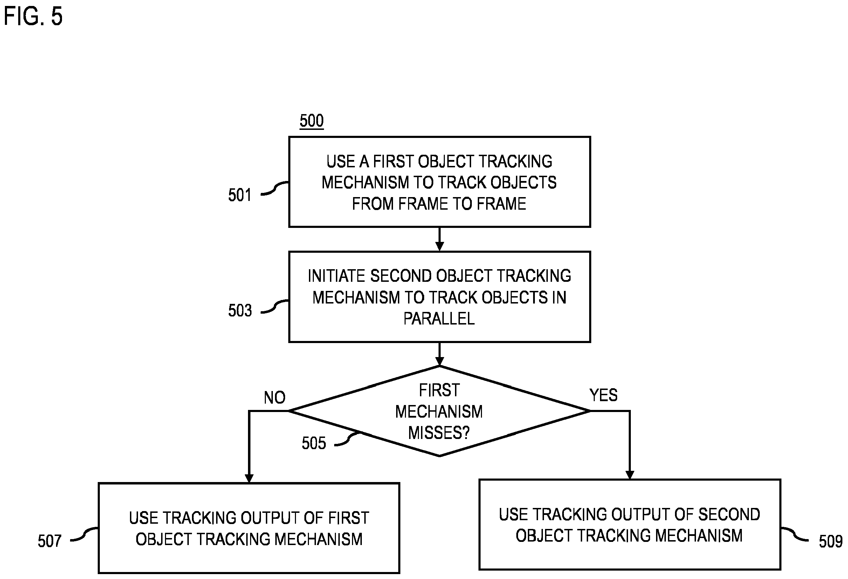

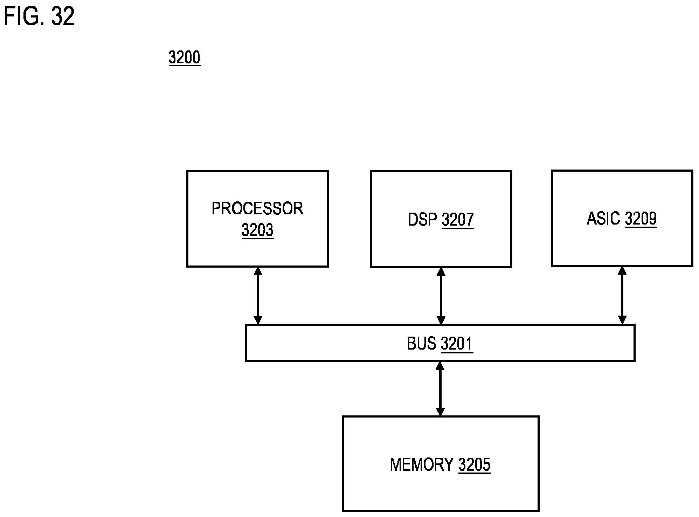

FIG. 5 is a flowchart of a process for real-time object tracking 500, according to various example embodiments. In various example embodiments, the real-time, near real-time or substantially real-time object tracking system 101 and/or any its components may perform one or more portions of the process 500 and may be implemented in/by various means, for instance, a chip set including a processor and a memory as shown in FIG. 32 or in a circuitry, hardware, firmware, software, or in any combination thereof. As such, the system 100 and the real-time object tracking system 101 and/or any its components can provide means for accomplishing various parts of the process 500, as well as means for accomplishing examples of other processes described herein in conjunction with other components of real-time object tracking system 101. Although the process 500 is illustrated and described as a sequence of steps, it is contemplated that various examples of the process 500 may be performed in any order or combination and need not include all of the illustrated steps.

In step 501, the real-time object tracking system 101 uses a first object tracking mechanism (e.g., a DNN-based object tracking such as but not limited to the DNN-based object detection & feature extraction 107 or equivalent) to detect and associate one or more objects from frame to frame/across frames or across of multiple frames of a video. In some examples, the first object tracking mechanism may fail/miss to detect and associate the one or more objects from every sequent frame at some time points, but instead, detects and associates the one or more objects in any subsequent frame.

In step 503, the real-time object tracking system 101 initiates one or more second object tracking mechanisms (e.g., a ROI tracking or equivalent) to track the respective one or more or each objects detected by the first object tracking mechanism from frame to frame or across frames of the video in parallel/concurrently with the first object tracking mechanism. In one example, an ROI to be tracked by the ROI object tracking is provided by the deep-neural network-based object tracker 107 on the initiating of the ROI object tracking. In one example, the real-time object tracking system 101 resizes or crops the frame for input to the one or more second object tracking mechanisms (e.g., based on the ROI specified by the first object tracking mechanism). In one example, an individual/one/respective second object tracking mechanism of the one or more second object tracking mechanisms is respectively initiated for an individual/one/respective object of the one or more objects from the first object tracking mechanism. In other words, one/respective instance of ROI tracking (i.e., one instance of the second object tracking mechanism) is initiated for a given object detected by the first object tracking mechanism (e.g., the DNN-based object tracking)

In one example, to test the tracking output of the second object tracking mechanism, the real-time object tracking system 101 can crop the frame of the video based on a bounding box of the tracking output of the one or more second object tracking mechanisms. Then, the real-time object tracking system 101 can perform a re-identification of the one or more objects based on the cropped, i.e. smaller, frame.

In step 505, the real-time object tracking system 101 determines whether the first object tracking mechanism misses the detection of target objects in the frame being processed. By way of example, the detection can be missed based on determining that (1) the detection confidence for a detection by the first object tracking mechanism is below a threshold confidence; or (2) the first object tracking mechanism could not process the frame before a set time period has expired or before receiving a next frame to process.

In step 507, if the first object tracking mechanism has not missed/failed detections in the frame, the tracking out of the first object tracking mechanism can be used. In one example, the real-time object tracking system 101 can reinitiate the second object tracking mechanism based on a detection of the object by the first object tracking mechanism in a subsequent frame of the video.

However, in step 509, the real-time object tracking system 101 uses a tracking output of the one or more second object tracking mechanisms in place of the first object tracking mechanism for a frame of the video based on determining that first object tracking mechanism has missed/failed a detection of the object in the frame of the video.

In one example, based on the tracking output of the frames of the video, the real-time object tracking system 101 generates a tracklet respectively for the one or more objects based on first object mechanism, the one or more second object tracking mechanisms, or a combination thereof. The tracklet, for instance, is a sequence of detections across a plurality of frames of the video.

In one example, the real-time object tracking system 101 classifies the tracklet as active, inactive, tracked, and/or fragmented based on the first object tracking mechanism, the one or more second object tracking mechanisms, or a combination thereof to facilitate tracking the target objects across frames of the video.

In one example, because the real-time object tracking system 101 relies on the object detection and feature extraction by one or more deep neural networks, the functions of the DNN-based object detection & feature extraction 107 is first described in more detail. For example, in which the object detection is based on deep neural networks, such a deep neural network can be used to perform tasks such as but not limited to one or more of:
- Detect target objects, e.g., persons and vehicles (car, truck, bus, and boat etc.) in the scenes. The real-time object detection & feature extraction 107 will not track any class of objects that the deep networks are not trained to detect.
- Estimate the quality of feature representation. For example, a DNN may be pre-trained for keypoint detection. The real-time object tracking system 101 can use the keypoint scores to evaluate the image qualities that can elucidate the validity of the corresponding feature representations.
- Extract features of detected objects, e.g., a deep network can be used to generate a representation of the appearance features.
- Classify a region of interest (ROI) in an image to determine if a ROI tracker has drifted away.

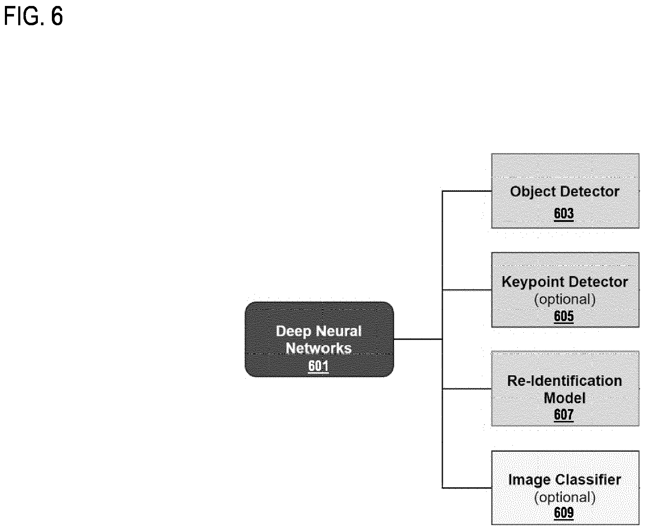

FIG. 6 summarizes various examples of the DNN models that can be used for real-time object tracking, according to various example embodiments. As shown, one example DNN model 601 includes an object detector 603, an optional keypoint detector 605, a re-identification model 607, and an optional image classifier 609.

In one example, the object detector 603 has output including but not limited to classes, bounding boxes, and confidence levels. If instance segmentation models like Mask-RCNN (Region Based Convolutional Neural Networks) are used, binary masks are also provided. Mask-RCNN, YOLO (You Only Look Once) network, SSD (single-shot detector) network, and any other models refined on custom datasets can be used for object detection. Basic features or considerations of the object detector 603 can include but is not limited to:
- It can be any pre-trained model that covers the classes of target objects
- Since the tracking system's performance can depend on a DNN's detection quality, a good enough model should be used for the task of object detection. If necessary, the real-time object tracking system 101 may use a deeper network to achieve better detectability at a cost of lower speed.

In one example, the optional keypoint detector 605 can be used to detect objects (e.g., persons) and localize one or more keypoints (i.e. detailed features) in an object (e.g., eyes, nose, ears, wrists, shoulders, hips, knees, ankles, etc.), e.g. for a pose estimation. The outputs include one or more bounding boxes, keypoint locations, or associated confidence scores, or any combination thereof. Basic features or considerations of the keypoint detector 605 can include but are not limited to:
- If keypoint estimation is available, the real-time object tracking system 101 can calculate the average value of the keypoint scores for each detected object. If the average value exceeds a pre-defined threshold, the embedding (e.g., a representation of the object's appearance features) will be deemed to be reliable. Otherwise, the embedding will be ignored and will not be used for data association. To calculate the average keypoint score, the real-time object tracking system 101 can use all keypoint estimates or selectively use the keypoint estimates.

In one example, the re-identification (Re-ID) model 607 can be a feature representation learning model that has been trained, e.g., using a triplet loss function or equivalent. Given an image portion of a detected object, the Re-ID model 607 can generate a high-dimensional real-valued vector (e.g., embedding) as a representation of the object's appearance features. Basic features or considerations of the Re-ID model 607 can include but are not limited to:
- The Re-ID model 607 can be trained to achieve an acceptable domain generalizability.
- The processing time should be small.

In one example, the optional image classifier 609 is a deep learning model for recognizing an image. The image classifier 609 takes as input an image and returns probabilities that the image belongs to one or more classes of objects. In one example, a binary image classifier may be trained as part of a custom-built Re-ID model 607. Basic features or considerations of the image classifier 109 can include but are not limited to:
- The image classifiers 609 need to be able to predict the class of a region of interest (ROI) of an image.
- If a custom-built Re-ID model 607 is used, the image classifier 609 can be one of the heads of the underlying Re-ID network.

In one example, as previously described, the real-time object tracking system 101 is associated with an image grabber 113. By way of example, the image grabber 113 is the frontend of the tracking pipeline. The image grabber 113, for instance, has the following basic functions:
- Capturing video frames from video source, such as one or more cameras and put the frames in a one-slot buffer; and
- Forwarding the frames at a desired rate to the subsequent stages, like object detection, in the pipeline.

In one example, for real-time applications, the desired/target frame rates can be for example, 10 frames per second or higher (or any other target/desired frame rate); for near-real-time applications, the frame rates can be in the range, for example, from 5 to 10 frames per second (or any other target/desired frame rate range). A desired/target frame rate can be selected based on system performance requirements and the available computation resources. In some examples, the pre-configured frame rates for the tracking systems are lower than the video source frame rates (e.g., 30 frames per second) because of limited computation resources and pipeline throughput in the tracking system. Depending on the communication network bandwidth and delay, the achievable frame rates at which the image grabber 113 is emitting the received images may be lower than the desired FPS, particularly when a synchronous communication interface is employed between the video source and the image grabber 113. When the pre-configured FPS is not achieved due to network issues, the image grabber 113 can operate at the maximum achievable FPS on a best-effort basis.

In order for the image grabber 113 to adapt to the actual detection and tracking pipeline throughput and network condition changes, the image grabber 113 can be configured to receive the detection and tracking information published by the tracking functionality. In one example, the image grabber 113 can also be configured to publish the original video or frames decorated with the detection and tracking information (e.g., superimpose bounding boxes and unique IDs over the original images) for monitoring purposes. Therefore, an interface can be provided for the image grabber 113 to subscribe to the messages produced by the real-time object tracking pipeline that contain the detection and tracking information.

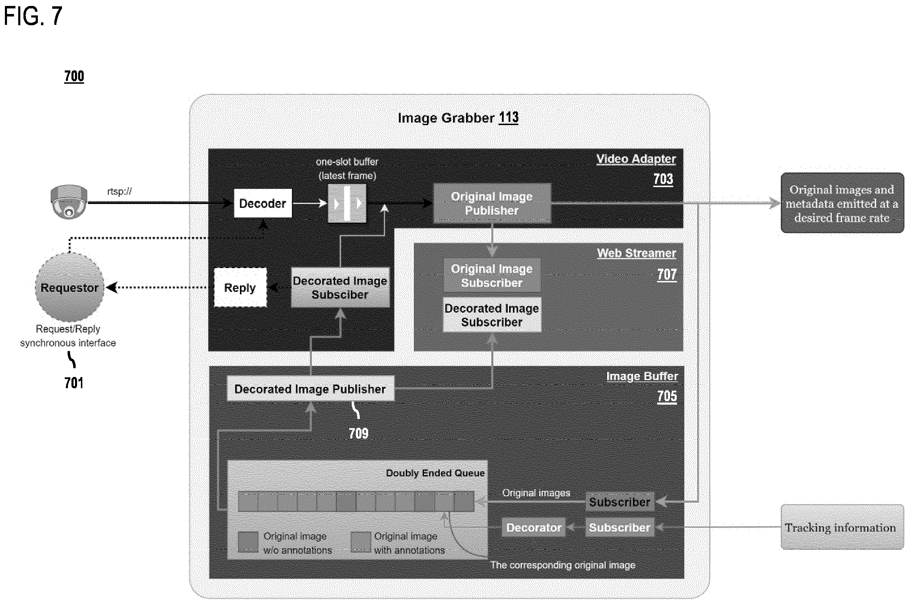

A diagram 700 of the image grabber 113 is illustrated in FIG. 7**Error! Reference source not found,** where a Request/Reply synchronous interface 701 is also illustrated in dotted lines. The functional blocks include video adapter 703, image buffer 705, and web streamer 707 describe further details on the image grabber 113 as described in the FIG. 2. These functional blocks are implemented in separate processes and running in parallel/concurrently.

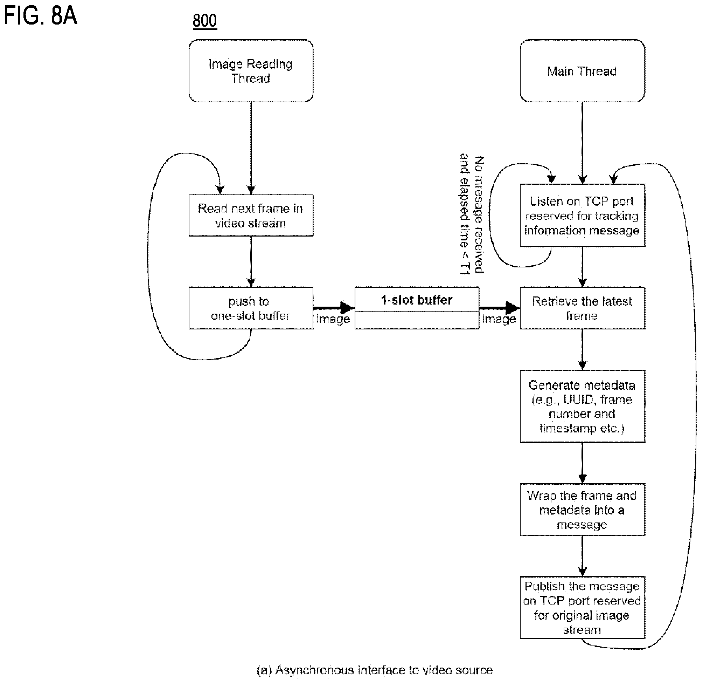

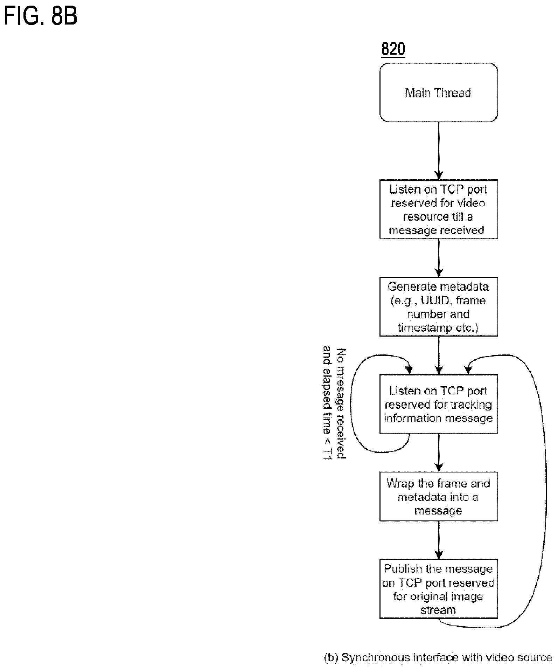

In various example embodiments, the video adapter 703 is to capture images and publish the latest frame upon receiving a feedback (e.g., a decorated image or a piece of tracking information) from the pipeline. In the case of asynchronous interface to the video source (e.g., Real Time Streaming Protocol (RTSP), Hypertext Transport Protocol (HTTP), or equivalent), the video adapter 703 consists of two threads: one to read the next frame from the interface to the video source and put the newly arriving frame to the one-slot buffer if the buffer is unlocked (so the previous frame is silently discarded) and the other to listen on the TCP port reserved for tracking information message stream and publish the latest frame together with metadata on a TCP port reserved for original image stream upon receiving a message or if no tracking information message is received and the elapsed time exceeds a time interval T1. FIG. 8A illustrates a flowchart 800 for the video adapter 703 in the case of an asynchronous interface to a video source, and FIG. 8B illustrates a flowchart 820 for the video adapter 703 in the case of a synchronous interface to a video source.

In one example, in the video adapter 703, the time interval T1 = alpha/TARGET_FPS where TARGET_FPS is a pre-configured frame rate, and the factor "alpha" is greater than 1 and determined based on the current short-term actually achieved frame rate. For example, alpha = 1.2 if the achieved frame rate > 0.5^{∗}TARGET_FPS, otherwise alpha = 2.0. The short-term actually achieved frame rate is defined as the number of tracking information messages received over a sliding time window divided by the time window's length.

In one example, the functional block "image buffer" 705 is to overlay the original images with the corresponding detection and tracking information and then publish the decorated images for visualization (e.g., via a decorated image publisher 709). In addition or alternatively, the image buffer 705 is also used to throttle or regulate the flow of images forwarded to the tracking pipeline. By way of example, the following parameters can be used for the functions of the image buffer:
- TARGET_FPS: the desired frame rate.
- ALLOWED_LATENCY: the allowed delay from the instant when an original image is forwarded to the object tracking pipeline to the instant when the corresponding tracking information is received. The value of this parameter must be greater than the minimum achievable pipeline processing delay. Considering the delay variations due to changes in communication network conditions and other factors (e.g., the number of target objects in the scenes and available computation resources etc.), this parameter's value should be chosen in a reasonable range, e.g., 0.5 s ~ 2 s.
- MIN BUFFER OCCUPANCY: a minimum number of images stored in the buffer, e.g., the real-time object tracking system 101 can set this parameter to 3. A value can be set to the parameter based on the average tracking pipeline delay and desired/target frame rate.

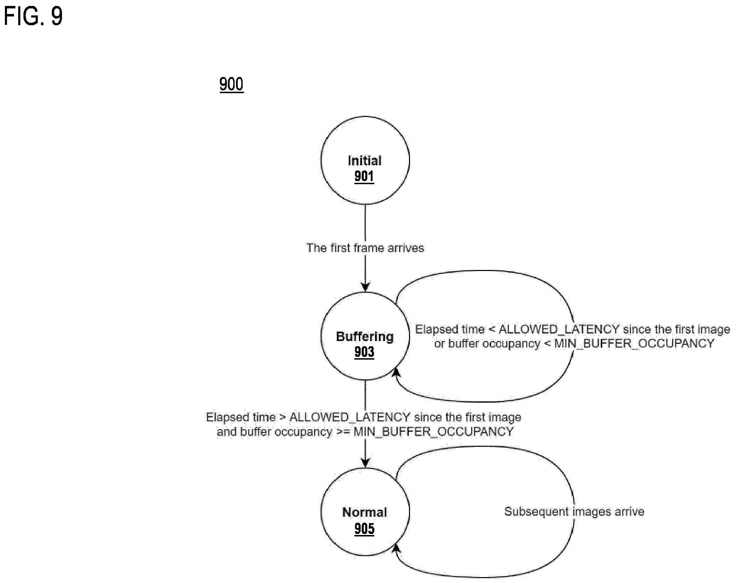

In various example embodiments, as shown in FIG. 9, the image buffer 705 has three process states 900: an initial state 901, a buffering state 903, and a normal state 905. FIG. 9 also shows the state transitions and the conditions that trigger the transitions between the three states.

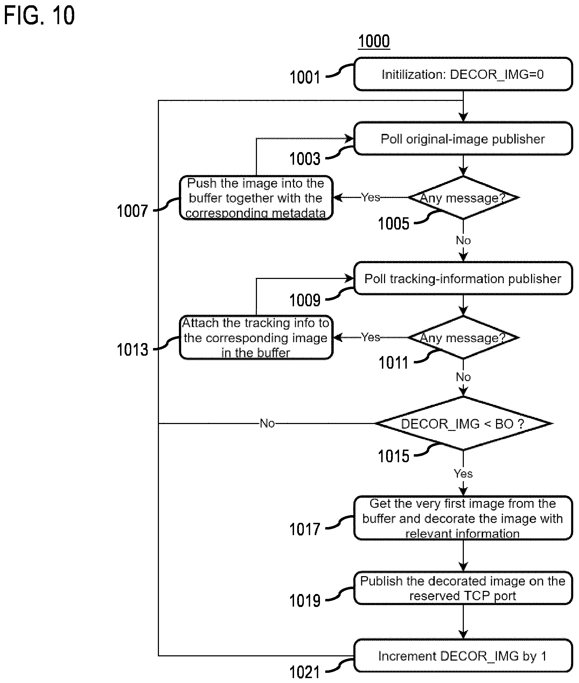

FIG. 10 shows how the image buffer 705 operates in the "Buffering" state 903, according to various example embodiments. During the buffering state 903, the real-time object tracking 101 can use the process 1000 of FIG. 10 to ensure that there is at least MIN_BUFFER_OCCUPANCY number of original images in the image buffer when the image buffer enters the "Normal" state 905. The actual number of original images will depend on the actual frame rate of video stream as well as the value of the parameter ALLOWED LATENCY.

At step 1001, a counter for the number of decorated images that have been published so far (DECOR_IMG) can be initialized (e.g., set to 0). At step 1003, the original-image publisher in the Video Adapter 703 can be polled. The poll time can be set at any target value (e.g., equal to 1 millisecond or some other designated value). At step 1005, the image buffer 705 checks for any received messages during the poll time. If a message with an image is received within the poll time, the image is pushed into the buffer 705 together with the corresponding metadata (at step 1007).

If no message is received within the poll time, the process continues to step 1009 where a tracking-information publisher (e.g., the tracking information aggregation process 111 or other equivalent function/process) is polled. The poll time at this step can also be set to any value (e.g., 1 millisecond or some other designated value). Step 1011 then checks for any received messages. If a message with tracking information is received within the poll time, the tracking information (Merged Detections 229) is attached to the corresponding image in the buffer (at step 1013).

If no message is received within the poll time, at step 1015, the number of decorated images (DECOR_IMG) in the buffer is checked against the buffer occupancy (BO) which is the number or original images currently in the buffer. If the number of decorated images is less than BO, the process continues to step 1017. At step 1017, the process obtains a first image from the buffer and decorate the image with relevant information (e.g., detection and tracking information). In some examples, the relevant information includes debugging information that describes internal state variables used by the system 100 for visual object tracking. In this way, the internal state variables are visualized in the decorated image to provide information for debugging or optimizing object tracking processes.

At step 1019, the decorated image can be published (by Decorated Image Publisher 709 in FIG. 7) on the reserved TCP port or equivalent. For example, a TCP port can be reserved for the publisher. At step 1021, the number decorated images (DECOR_IMG) can then be incremented by 1, and the process of FIG. 10 can be repeated.

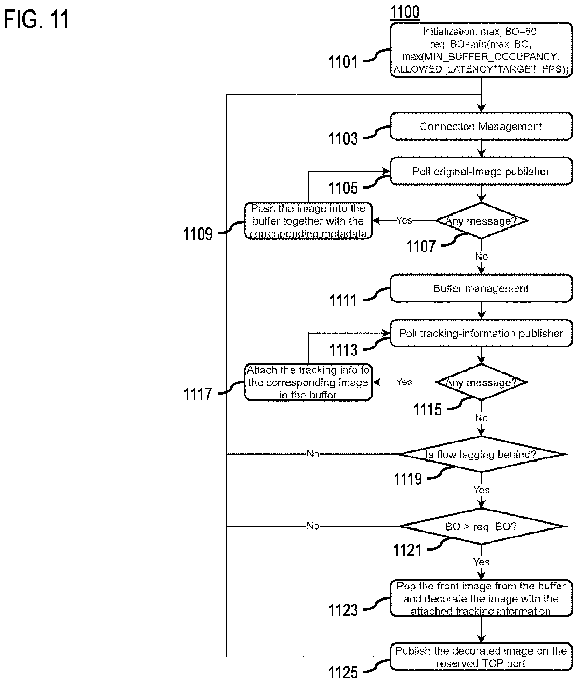

In one example, after the image buffer 705 enters the "Normal" state 905, it is operating as shown in process 1100 of FIG. 11. Initially, at step 1101 an internal variable req_BO, the required buffer occupancy, can be defined along with a maximum buffer occupancy (max_BO). For example, req_BO = min(max_BO, max (MIN BUFFER OCCUPANCY, ALLOWED_LATENCY * TARGET_FPS)). Its initial value is determined by the parameter TARGET_FPS and ALLOWED_LATENCY. At step 1103 "connection management", if the elapsed time is greater than T2 before the next original image arrives, this may indicate that the connection has been lost and the image buffer 705 needs to re-connect to the original-image publisher (in the Video Adapter 703). If the elapsed time is greater than T3 before the next tracking information message arrives, this may indicate that the tracking pipeline does not work properly and image buffer 705 needs to re-connect to the tracking-information publisher (e.g., the tracking information aggregation process 111 or other equivalent function/process). By way of example, both T2 and T3 can be set to 5 seconds (or any other value depending on a desired process function). In other words, if a connection is deemed, the image buffer 705 re-connects to the publisher, and no other action is needed at step 1103.

At step 1105, the original-image publisher can be polled. The poll time can be set at any target value (e.g., equal to 1 millisecond or some other designated value depending on a desired process function). At step 1107, the image buffer 705 checks for any received messages during the poll time. If a message with an image is received within the poll time, the image is pushed into the buffer together with the corresponding metadata (at step 1109).

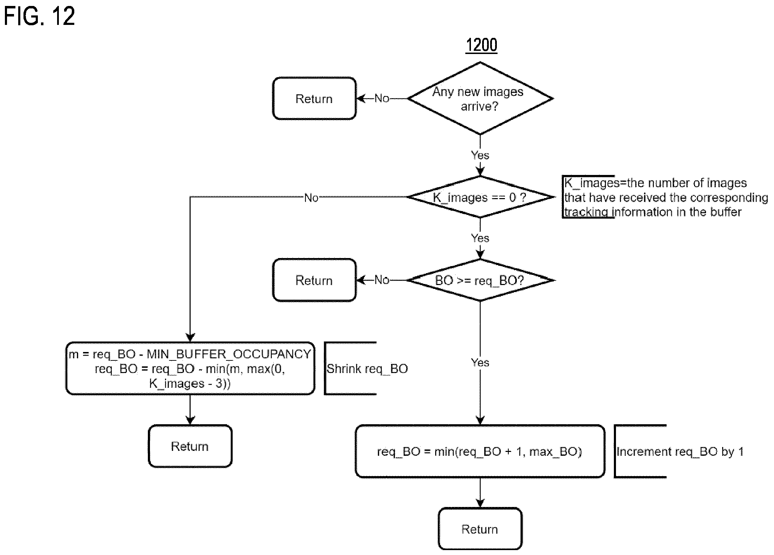

If no message is received with the poll time, the process proceeds to step 1111 "Buffer management." For example, at step 1111, the required buffer occupancy (req_BO) is adjusted according to an actual pipeline processing delay if needed. In one example, the actual pipeline processing delay is expected to be smaller than ALLOWED_LATENCY in most cases. If not, adaptive "Buffer management" is used to deal with the issue caused by slower pipeline processing. The details of the step "Buffer management" are provided in process 1200 of FIG. 12. In practice, if a tracking information message arrives late that the corresponding original image has been deleted from the buffer, the message will be silently discarded.

At step 1113, the tracking-information publisher is polled. The poll time at this step can be set to any value (e.g., 1 millisecond or some other designated value). Step 1115 then checks for any received messages. If a message with tracking information is received within the poll time, the tracking information is attached to the corresponding image in the buffer (at step 1117).

At step 1119, whether the flow is lagging behind is checked. For example, if the elapsed time exceeds 1/TARGET_FPS since the last decorated image was generated, the image flow is deemed to be lagging behind. If the flow is lagging behind, the buffer occupancy (BO indicating the number image in the buffer) is greater than the required buffer occupancy (req_BO). If yes, at step 1123, the front image from the buffer is popped (i.e., removed from the buffer) and decorated with the attached tracking information. In other words, a decorated image is generated and then removed from the buffer. If no tracking information is available, debugging information as described in the example above, can be attached in addition to or instead of the tracking information. At step 1125, the decorated image is published on the reserved TCP port associated with the publisher.

As described in the various examples of the image buffer 705 above, the outputs from DNNs, e.g. data messages, (or any other equivalent object/feature detector) are published on a reserved TCP port or equivalent output stream. Therefore, the tracking algorithms can subscribe to the data messages and receive the results coming from the previous stages in the pipeline (e.g., the real-time object tracking system 101). In one example, the inputs to the unit of tracking algorithms (e.g., tracking algorithms 407 of FIG. 4) include any combination of the following features:
- Object detection result(s) in the image of the current frame if the image has been processed by DNNs:
   ∘ Class names (e.g., person, car, etc.), bounding boxes and/or confidence levels;
   ∘ Binary masks for the detected objects if instance segmentation is performed; and
   ∘ Keypoints and the scores if keypoint detection is performed.
- Feature representations of the detected objects if the image has been processed by DNNs
   ∘ Color histograms in an RGB color space based on the sub-images cropped using the bounding boxes;
   ∘ Color histograms in an RGB color space based on the masked sub-images (i.e., the pixels inside the object's contour) if the binary masks are available (note that background clutter may be excluded in the color histograms); and
   ∘ Embeddings (real-valued vectors) for the detected objects generated using re-identification models.
- The original image of each frame despite whether or not the image is processed by DNNs. If the image was not processed, the detection result and feature representations are left empty.

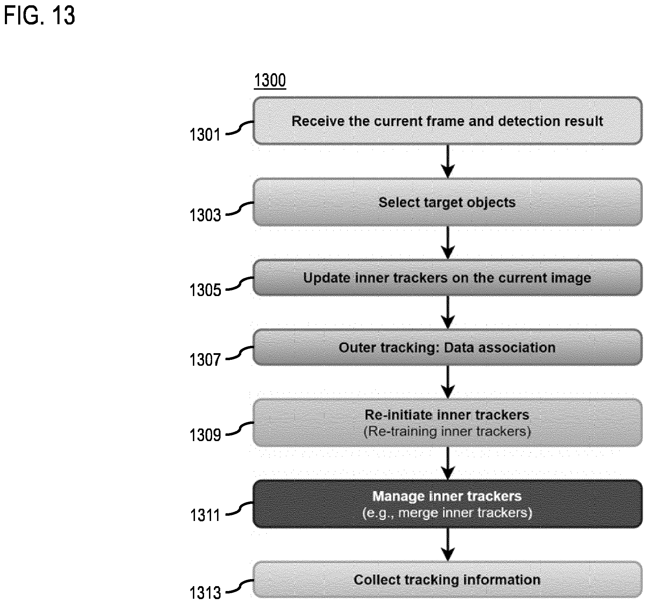

FIG. 13 is a flowchart 1300 for object tracking relating to FIGs. 1 and 2, according to various example embodiments. The following definitions of some terminologies are used to facilitate the description of flowchart 1300:
- Tracklet: A tracklet is a sequence of the detections (e.g., bounding boxes) across frames associated to the same object, and a related dataset / data object. In addition to the bounding boxes, other attributes such as appearance feature representations (embeddings and color histograms etc.) are also included in a tracklet. A unique ID is assigned to a tracklet.

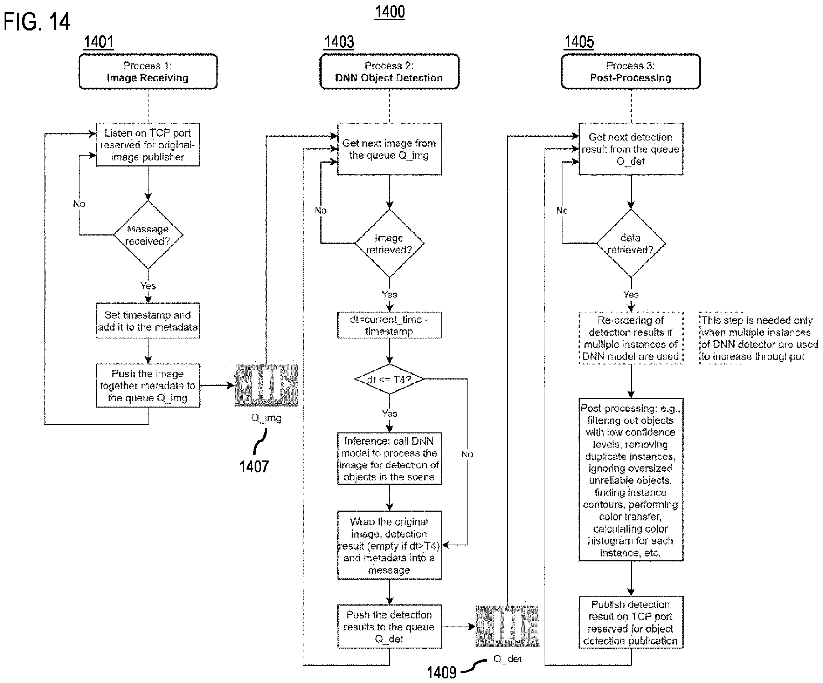

- Symbol: A symbol is the same as tracklet. Symbol and tracklet are used interchangeably.
- Instance: An instance is a detected target object in an image which can be represented as bounding box, and/or any other representation of the detection.
- Annotated frame (or image): An annotated frame is an image together with the corresponding non-empty detection result that is fed to the tracking algorithm. For example, in one example, this means that this image has been sent to DNN-based object detector for inference. It may be also processed by other deep neural networks like keypoint model. Note that even for an annotated frame, some of target objects may be missed due to false negative errors.
- Plain frame (or image): A plain frame is an original image with no detection result or empty detection result that is fed to the tracking algorithm. This image may have skipped the deep neural networks because the image's delay in the queue exceeds a threshold T4 (e.g., see FIG. 14, process 1403), or the image may have been processed by the DNNs, but the detection result is empty because either no target objects are present in the scene, or the target objects are missed (false negative detection).
- Frame: One of many still images which compose a complete moving picture/video.

In step 1301, the current frame and detection results (e.g., generated by a DNN-based object tracker) are received, e.g., in an outer tracker 103. If the detection result is not empty, this current frame is an annotated frame. Otherwise, the current frame is a called a plain frame.

In step 1303, the target objects to track are selected. In one example, the target objects are those objects that the applied DNN-based object tracker has been trained to detect (or a subset thereof). The selected target objects are included in a list TARGET_OBJECTS. If the list TARGET_OBJECTS is not empty, then active symbols that are not in the list can be stopped.

In step 1305, the inner trackers 105 (1 - k) are updated on the current image. In one example, the inner trackers 105 are based, for example, on ROI trackers or equivalent algorithms. Then, the detection results (e.g., bounding boxes) in the current frame are used to initiate or update the trackers based on the ROIs indicated by the bounding boxes of the current frame.

In step 1307, the outer tracker 103 is used to perform data association on currently tracked objects to track them from frame to frame. In other words, given the outputs of the deep neural networks, the outer tracker 103 can do data association. That is to say, if an object is detected in two consecutive frames, the outer tracker 103 will form the correspondence of the object between the current frame and the previous frame using, for instance, location prediction (e.g., via Kalman filtering based on motion model) and/or the object's appearance features which are provided by deep-learning model.

More specifically, motion estimation forecasts the locations of the objects in the subsequent frame and facilitates data association between the frames. Successful data associations can also be dependent on the appearance features of the objects, for example color histograms. Furthermore, the appearance features and the color histograms are used for re-tracking of the objects in the event of loss of tracking due to occlusion or the object leaving or re-entering the video frames.

In step 1309, the one or more inner trackers 105 (1 - k) can be re-initiated using the latest detection (e.g., bounding box) resulting from the outer tracker 103. In other words, if an actively tracked symbol is updated using the latest detection, the inner tracker 103 is re-initiated (e.g., re-trained) based on the current image and the bounding box.

In step 1311, the detection results from the inner trackers 103 can be merged (e.g., via the inner tracking management function 109 or equivalent function/process). For example, multiple active symbols, that are driven by inner tracking/trackers, can be merged if they are deemed to belong to the same target object. In one example, if the one or more deep neural networks (e.g., associated with outer tracker 103) fail to detect the objects in the current frame and subsequent frames due to the detectability limitation or the mismatch between achievable FPS and target FPS (when this happens, some of frames will be skipped for processing by the deep networks), the data association may be broken, or the objects may be mis-matched due to the false negative detection. The inner trackers 105 are introduced to solve the technical problem in the situation when a missed detection happens, or some frames are skipped without being processed.

In one example, an inner tracker 105 can be initiated (e.g., by the inner tracking management function 109 or equivalent function/process) with the ROI to be tracked. The ROI, for instance, is provided by the outer tracker 103. The various examples of the inner tracking mechanism described herein maintain a bank/list of inner trackers 105 (e.g., ROI trackers) each corresponding to an object being tracked (e.g., an active symbol). Based on the outputs of the outer tracker 103 for the current frame, the inner tracking algorithm retrains (i.e. re-initiate) the ROI tracker for each object being tracked. The training of ROI tracker is relatively fast. In the presence of multiple ROI trackers, the training can be done in multiple threads on multiple cores if the CPU resources are sufficient.

Upon reception of the current frame, the inner tracking management function 109 or equivalent function/process will update the ROI trackers (e.g., inner trackers 105) using the image. As previously described, the outer tracker 103 will do data association based on the current detection result from the deep networks if any (note: the deep neural networks may not have time to process the current image depending on the available GPU/computing resources and the actual inference time) as well as the states of the inner trackers 105 (e.g., one inner tracker 105 for each target object being tracked).

In one example, to reduce processing time, the re-training/re-initiating or update of an inner tracker 105 (e.g., ROI tracker) can be done on a down-sized image or a cropped sub-image instead of the original full-size image, particularly when the object size is relatively large. The cropping of the images can be based on the location prediction provided by a motion model for each object being tracked (e.g., active symbol). In other words, the image can be cropped so that the cropped portion of the image is expected to depict the target object as it moves frame to frame. In one example, after a successful re-training of the one or more inner trackers 105, the system can re-align and/or re-size the estimated bounding box to the original full-size image.

In one example, a lifetime of an inner tracker 105 is limited. As use herein the lifetime of the inner tracker 105 refers to time or number of frames from the initiation of the inner tracker 105 by an outer tracking result to rei-initiation of the inner tracker 105 by the next outer tracking result. In the case of perfect outer tracking (e.g., where the outer tracker 103 does not miss any frames of the video), the lifetime of inner tracker is 1 frame. For an object being tracked, its corresponding inner tracker 105 starts upon the successful association of the current frame with the previous frame for the object. If the deep network fails to detect the object in the subsequent frames, the inner tracker 105 may be going on to estimate the object's bounding box and trajectory until the object gets detected again and successfully associated with previous trajectory.

In step 1313, the tracking information (e.g., from both the outer tracker 103 and inner trackers 105) can be collected for the current frame (e.g., annotated or plain frame) by the tracking information aggregation process 111 or equivalent function/process.

In various examples, the DNN-based object detection service used in the various example embodiments described herein can be implemented as shown in FIG. 14 where three separate processes 1400 are running in parallel for receiving original images (process 1401), invoking DNN-based model to detect objects (e.g., inference) (process 1403), and post-processing (process 1405) respectively. The communication between process 1401 and process 1403 is through a queue 1407 (e.g., Q_img). If an image has been waiting in the queue 1407 for a time period that is longer than T4, this image will skip inference with the DNN model (e.g., DNN-based object detection & feature extraction 107) so that the corresponding detection result will be set to "empty" in the message to be published. The value of T4 can be determined based on the average inference time of the DNN model. For example, if the inference time is about 100 milliseconds, the real-time object tracking system 101 can set T4=100 milliseconds. For communication between the process 1403 and process 1405, similarly, the real-time object tracking system 101 use another queue 1409 (e.g., Q_det), to transfer detection results to the post-processing step. It is noted that the depicted architecture with three separate processes 1401-1405 is provided by way of illustration not as a limitation. It is contemplated that one or more processes and/or their respective steps can be combined or performed by any other equivalent process.

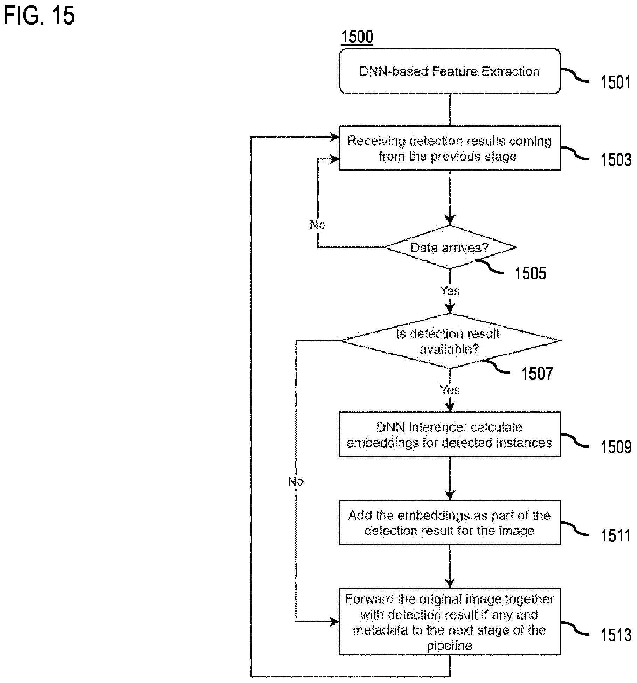

In one example, the stage of object detection is followed by feature extraction, for example, in the process 107. FIG. 15 shows further implementation details of feature extraction stage 1500 where the inference is based on a re-identification model mentioned in the above. At step 1501, the DNN-based feature extraction process begins by receiving one or more detection results coming from the previous stage (at step 1503). By way of example, the real-time object tracking system 101 can listen on a TCP port (or equivalent communication channel) for object detection result.

At step 1505, the real-time object tracking system 101 determines whether data (e.g., detection results or other data related to detection results) arrives. If not, the process returns to step 1503 to continue listening for data detection results. Otherwise, the process continues to step 1507.

At step 1507, the real-time object tracking system 101 determines whether the received data includes any available detection result. For example, when the previous stage has no time to process the image, the original image skips the DNN model and is simply forwarded with no detection results. If a detection result is available in the received data, the process continues to step 1509.

At step 1509, a DNN inference is performed to calculate embeddings (e.g., vectorized features) for detected instances of target objects included in the received data. In one example, for parallelism of processes, such as the 1401, 1403 and 1405 (to increase speed of processing), cropped images of the detected objects are feed in a batch to the DNN model. Embeddings, for instance, refers to a high-dimensional real-valued vector to represent the extracted feature associated with the detected instances of the target objects.

At step 1511, the embeddings are added as part of the detection result for the image. In one example, the detection results and the original image can be wrapped in a JSON formatted message (or any other equivalent message format).

At step 1513, the real-time object tracking system 101 forwards the original image together with detection results if any and metadata to the next stage of the pipeline. For example, if at step 1507 no detection result is available, then no detection result will be forwarded at this step. In one example, the message can then be published on a TCP port reserved for the publish/subscribe connection (or using any other equivalent communication means to transmit the message).

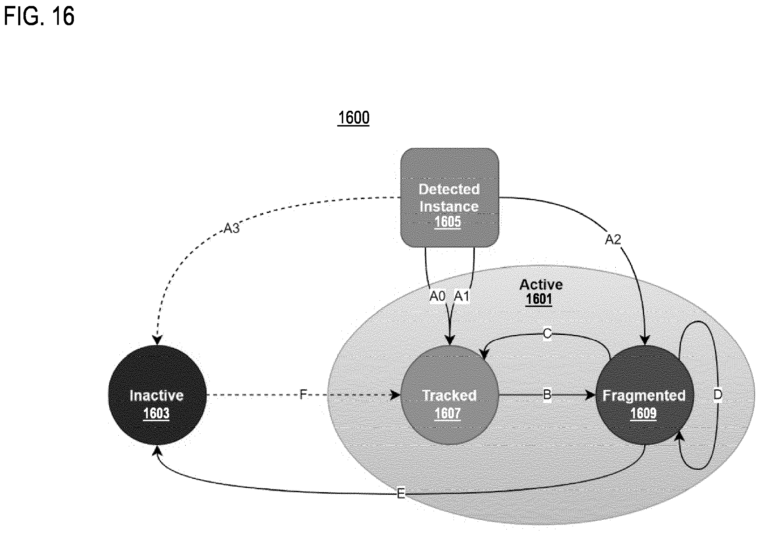

FIG. 16 is diagram of outer tracking state transitions 1600 upon receiving an annotated frame, e.g., from the process 107, according to one example. As shown in **Error! Reference source not found.,** a symbol or tracklet, that is generated to represent detected objects across annotated frames, has two states: Active 1601 and Inactive 1603. Once a detected instance 1605 is deemed to be a new target, it will be assigned a unique ID (step A0) and enter the Active state 1601. In the Active state 1601, the symbol has two sub-states: Tracked 1607 and Fragmented 1609. If the symbol connects to a detected object in the current frame, it will stay in the Tracked sub-state 1607 (step A1, or step A2 and step C); otherwise, it will be in the Fragmented sub-state 1609 (step B). A fragmented symbol will be forced into Inactive state 1063 if it fails to reconnect to any new detections, e.g., during a certain time frame (steps E and D). In general, when the target object leaves the scene or gets out of view for a while, the corresponding symbol will become inactive 1603.

In summary, in one example, the transitions between the various states of FIG. 16 are as follows:
- Transition A0 (e.g., from detected instance 1605 to Active 1601 and Tracked 1607): The new detected instance 1605 is assigned a unique ID as a new active symbol (i.e., a new object being tracked);
- Transition A1 (e.g., from detected instance 1605 to Active 1601 and Tracked 1607): The new detected instance 1605 is associated with an existing active symbol;
- Transition A2 (e.g., from detected instance 1605 to Active 1601 and Fragmented 1609): The new detected instance is associated with a fragmented tracklet;
- Transition A3 (optional) (e.g., from detected instance 1605 to Inactive 1603): The new detected instance is re-identified, and the same ID is re-assigned;
- Transition B (e.g., from Tracked 1607 to Fragmented 1609): The symbol fails to be associated with any new detected instance and its inner tracker also fails, starts a TIMER FRAG;
- Transition C (e.g., from Fragmented 1609 to Tracked 1607): The fragmented tracklet reconnects once it is associated with a new instance (e.g., retrack);
- Transition D (e.g., from Fragmented 1609 to Fragmented 1609): The symbol fails to be associated with any instance in the current frame;
- Transition E (e.g., from Fragmented 1609 to Inactive 1603): The symbol has stayed in the Fragmented sub-state 1609 for a predefined time (e.g., the timer TIMER FRAG expires); and
- Transition F (optional) (e.g., from Inactive 1603 to Tracked 1607): The inactive symbol is re-associated with a new detected instance and gets revitalized.

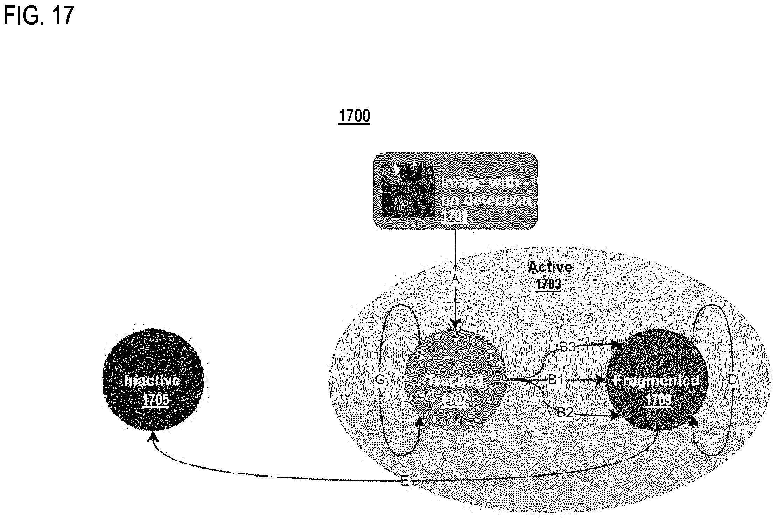

When a plain frame is received, e.g., in a signal 207, without detection result available, the real-time object tracking system 101 uses the current image to update the inner tracker of each active symbol (i.e., each object being tracked). FIG. 17 demonstrates the state transitions 1700 in this case, according to various example embodiments. As shown, an image with no detection 1701 can be in an Active state 1703 or an Inactive state 1705. Within the Active state 1703, there is also a Tracked sub-state 1707 and Fragmented sub-state 1709 as similarly described in FIG. 16. In one example, the transitions between the various states of FIG. 17 are as follows:
- Transition A (e.g., from image with no detection 1701 to Active 1703 and Tracked 1703): The current image 1701 is used to update the inner tracker of the active symbol;
- Transition B1 (e.g., from Tracked 1707 to Fragmented 1709): The active symbol does not have an inner tracker, and a timer TIMER_FRAG is started;
- Transition B2 (e.g., from Tracked 1707 to Fragmented 1709): The inner tracker fails to be updated, and a timer TIMER_FRAG is started;
- Transition B3 (e.g., from Tracked 1707 to Fragmented 1709): The inner tracker is successfully updated, but the new bounding box fails the test (e.g., motion prediction test and/or feature test), and a timer TIMER_FRAG is started;
- Transition D (e.g., from Fragmented 1709 to Fragmented 1709): The timer TIMER_FRAG of the B1, B2 and/or B3 is still running;
- Transition E (e.g., from Fragmented 1709 to Inactive 1705): The timer TIMER_FRAG of the B1, B2 and/or B3 expires; and
- Transition G (e.g., from Tracked 1707 to Tracked 1707): The inner tracker is successfully updated, and the new bounding box passes the test.

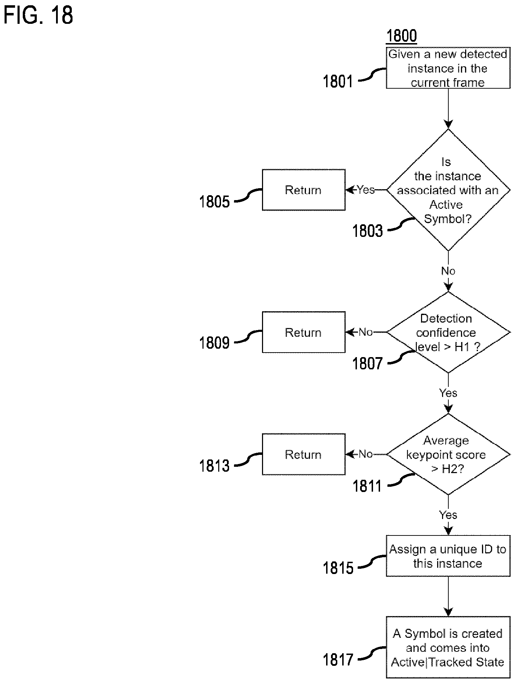

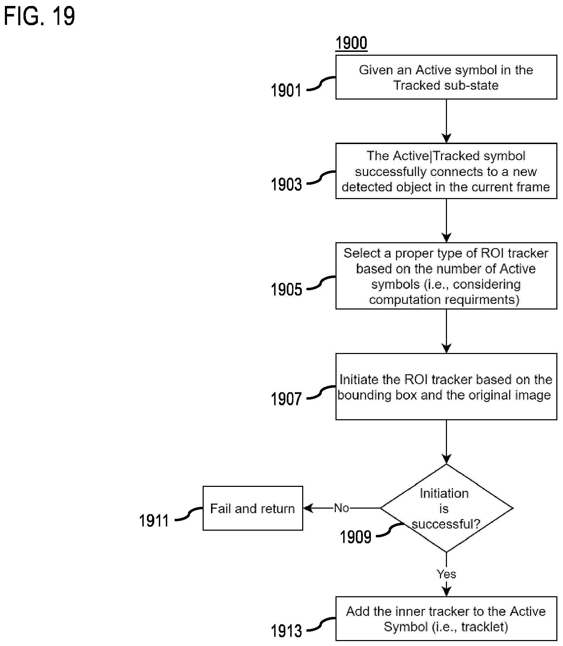

In various examples, when an instance is deemed to be a reliable detection and not be associated with any active symbols, it will be assigned unique ID and becomes an active symbol in a Tracked sub-state, as shown in FIG. 18. At the same time, an inner tracker will be also initiated for the new symbol, for instance, as described in FIG. 19. The initiation and re-initiation of inner tracker is discussed further below.

FIG. 18 is a flowchart of a process 1800 for initiation of an active symbol (i.e., an object being tracked), according to various example embodiments. At step 1801, a new detected instance in the current frame is given or otherwise determined. At step 1803, the real-time object tracking system 101 determines if the instance is associated with an active symbol. In one example, before a first detection of a target object arrives, there is no active symbol for the object. At step 1805, if there is already an active symbol for the given instance, the process 1800 returns to the originating process (e.g., originating process 209, 1307, or equivalent). If there is no active symbol for the given instance, the process continues to step 1807.

At step 1807, the real-time object tracking system 101 determines whether a detection confidence level of the given instance is greater than a threshold confidence H1. For example, to initialize an Active symbol, the instance's confidence level should be greater than a threshold to reduce the effect of false positive detections. If the confidence level is not greater than H1, the process 1800 returns to the originating process (at step 1809). If the confidence level is greater than H1 for the given instance, the process may continue to step 1811.

At optional step 1811, if one or more keypoint detections are available (e.g., by a keypoint detector 605), the real-time object tracking system may filter out some low-quality or unreliable detections (e.g., reflections in windows or glass walls). The filtering can be performed by determining whether an average keypoint confidence score (e.g., average of all detected keypoints of a target object) is above a second threshold confidence H2. If the average keypoint confidence score is not greater than H2, the process 1800 returns to the originating process (at step 1813). If the average keypoint confidence score is greater than H2 for the given instance, the process continues to step 1815.

At step 1815, the given instance is assigned a unique ID. Then at step 1817, a symbol is created and comes into the Active Tracked state.

FIG. 19 is a flowchart 1900 for initiation of inner tracking for an active symbol, according to one various example embodiments. At step 1901, an active symbol in the Tracked sub-state is given or otherwise determined (e.g., according to the examples described in FIG. 18). At step 1903, the active symbol in the Tracked sub-state successfully connects to a new detected object in the current frame. In other words, the active symbol is associated with a detected instance in the current frame.

At step 1905, a proper of type of ROI tracker (e.g., inner tracker 105) is selected based on the number of active symbols and/or by considering computation requirements/availability of the tracking system/process 101. For example, available ROI trackers can include but are not limited to Channel and Spatial Reliability Tracker (CSRT), Kernelized Correlation Filters (KCF), and/or equivalent. In terms of detection performance, the CSRT is generally better than the KCF. In terms of detection speed, the CSRT is generally slower than the KCF. Therefore, selecting the CSRT versus the KCF is a matter of balancing performance (e.g., detection accuracy/confidence) against processing speed.

At step 1907, the ROI tracker (e.g., inner tracker 105) is initiated based on the detection result (e.g., bounding box predicted by the DNN model) and the original image. In one example, the image may be resized (e.g., by half or other factor) to accelerate the ROI model initiation (or training) process, particularly for the CSRT.

At step 1909, the real-time object tracking system 101 determines whether the initiation of the inner tracker 105 is successful. If not successful, the process 1900 fails and returns (at step 1911). If successful, the inner tracker 105 is added to the active symbol (e.g., tracklet). In other words, the inner tracker 105 becomes part of the tracklet if the initiation is successful.

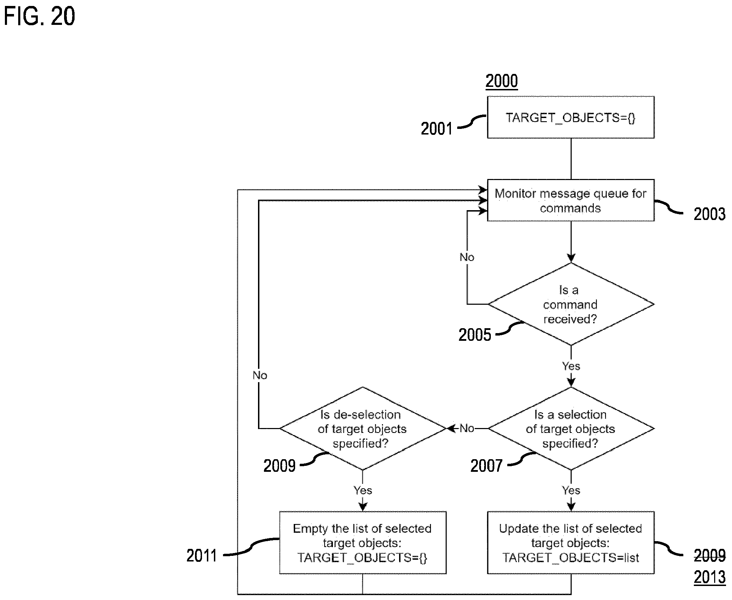

Before describing the implementation details of the outer-inner tracking algorithm, the selection of target objects is discussed. The various example of the real-time object tracking system 101 described herein are able to deal with multiple target objects. However, in some use cases, the real-time object tracking system 101 may be interested in a single target object or a subset of the detected objects, e.g., selected/defined by a user/operator of the system 101. In one example, if such a list of target objects is selected and published to the outer tracker 103, it will be stored in an internal variable TARGET_OBJECTS as shown in FIG. 20 where each target object is defined by the symbol's ID (identification) number. The target objects can be also defined by the regions of interest and/or keypoint. Once a list of target objects is defined, the tracking system tracks these objects in the list until the target objects are delisted or lost.

FIG. 20 is a flowchart 2000 of a process for selecting target objects, according to various example embodiments. At step 2001, an internal list of target objects (TARGET_OBJECTS={}) is initialized. If the list is empty, it means that all detected objects are tracked. Otherwise, only the objects in the list are tracked.

At step 2003, a message queue is monitored for commands related to management of the list of target objects. In one example, the commands are emitted from a dashboard in the control plane. At step 2005, the real-time object tracking system 101 determines whether a command is received based on the monitoring. If no command is received, the process returns to step 2003 to continue monitoring.

At step 2007, if a command is received, the real-time object tracking system 101 determines whether a selection of one or more target objects is specified in the command. In one example, the one or more selected target objects is specified by a list of corresponding tracking IDs. As described above, if the list is empty, then all detected objects are tracked. Otherwise, only the specified target objects are tracked. If the command is a selection command, then the list of selected target objects is updated based on the command (step 2009). The process can then return to step 2003 to monitor for additional commands.

At step 2011, if the command is not a selection command, the real-time object tracking system 101 determines if the command specifies a deselection of target objects. If the command is a deselection command, the list of target objects is emptied of the selected target objects (step 2013). The process can then return to step 2003 to monitor for additional commands.

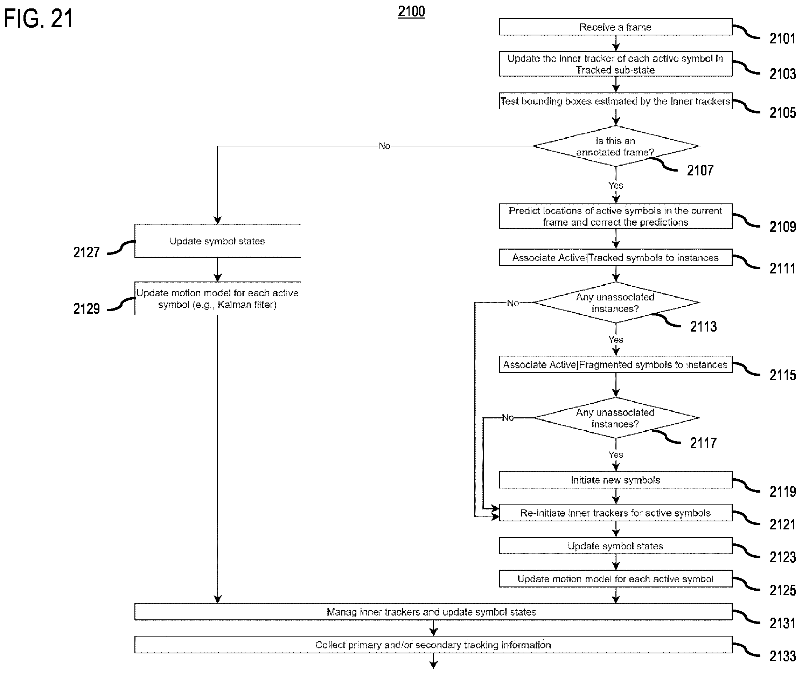

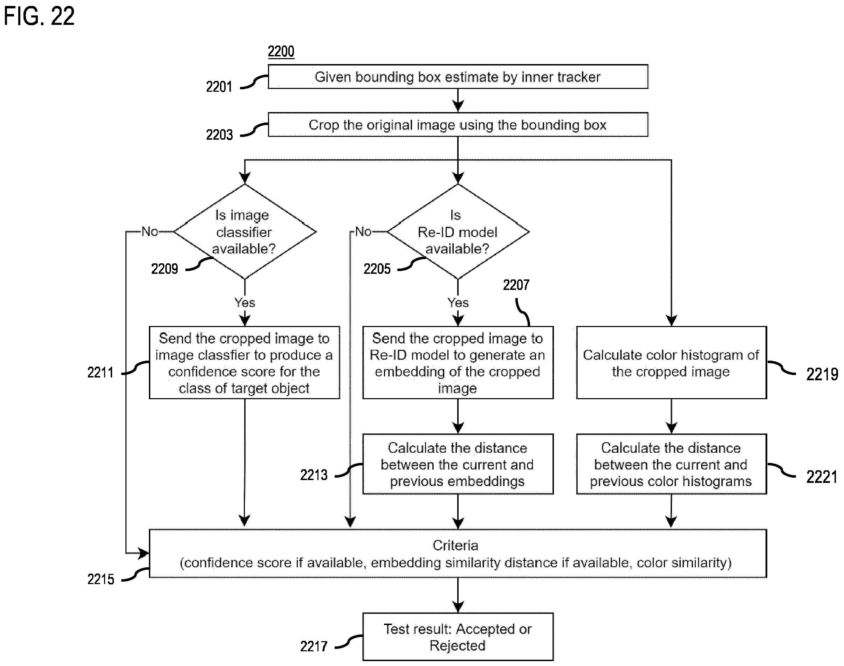

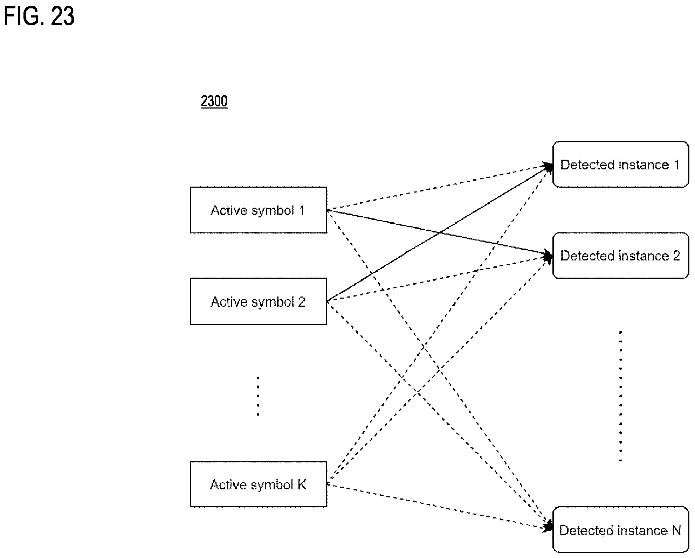

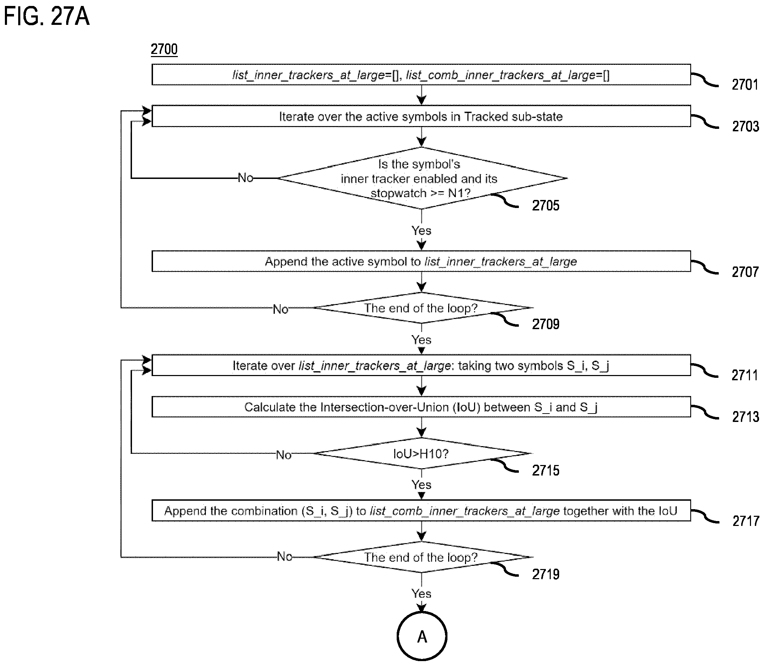

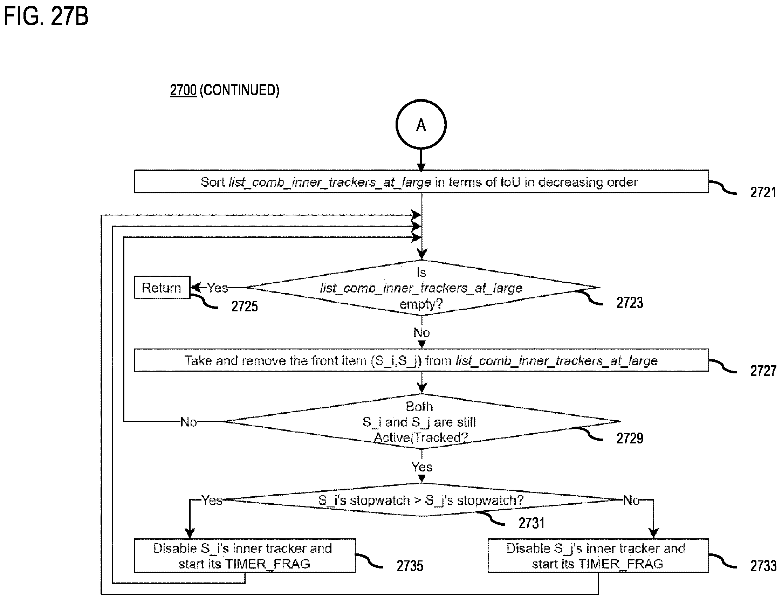

FIG. 21 is a more detailed flowchart 2100 for real-time, near real-time, or substantially real-time object tracking, e.g., the object tracking system/process 101, according to various example embodiments. Various examples of the following elements of the real-time object tracking are described in more detail including but not limited to at least one of:
- Update the inner tracker of each Active|Tracked symbol (e.g., function call, part of Inner tracker management function 109);
- Test bounding boxes estimated by the one or more inner trackers 105 (e.g., see FIG. 22);
- Predict locations of active symbols in the current frame (e.g., outer tracker 103);
- Associate Active|Tracked symbols to instances (e.g., see FIGs. 22-23);
- Associate Active|Fragmented symbols to instances (e.g., see FIGs. 23-26);
- Initiate new symbols (e.g., see FIG. 18)
- Re-initiate inner trackers for active symbols (e.g., function call, part of Inner tracker management function 109);
- Update symbol states (e.g., see FIGs. 16-17);
- Update motion model for each active symbol;
- Management of inner trackers (e.g., see FIGs. 27A and 27B, part of Inner tracker management function 109); and
- Collect primary and/or secondary tracking information (e.g., see FIG. 13).

At step 2101 of FIG. 21, a current/new frame is received. At step, 2103, an inner tracker of each Active|Tracked symbol is updated. An active symbol in the "Tracked" sub-state is associated with an ROI inner tracker 105 unless the inner tracker 105 failed to be initiated as the symbol connected to a corresponding instance detected by one or more deep neural networks (e.g., DNN-based object detection & feature extraction 107) in a previous frame. Upon arrival of a current/new frame, the real-time object tracking system 101 uses the image to update (e.g., re-train) a related inner tracker 105 (e.g., one inner tracker 105 (1 - k)) for each target object in the frame). For example, a cropped portion of the image corresponding to a detected bounding box of the target object is used to update or re-train the inner tracker.

The updating of the inner trackers 105 (e.g., one inner tracker 105 for each target object) generally is executed fairly fast/faster compared to a required frame rate (TARGET_FPS). In one example, to accelerate the updating of the inner trackers 105, the real-time object tracking system 101 can also re-size the original image before re-training the related one or more inner trackers 105. In multi-object cases, multithreading may be used to speed up the process if parallelism is supported. If an inner tracker 105 is successfully updated based on the current frame, a new estimate of a bounding box will be returned. Otherwise, the inner tracker 105 will be stopped and disabled. If an inner tracker 105 is successfully updated upon a plain frame, a bounding box estimate will be appended to the active symbol's trajectory and also will be used to drive the symbol's motion model. At the same time, the inner tracker's stopwatch will be also incremented by 1. The stopwatch is a counter defined when the inner tracker 105 was initiated. The stopwatch is reset when the inner tracker 105 is re-initiated using the bounding box inferred by the DNN-based object detector on the current image.

At step 2105, the bounding boxes estimated by the inner trackers are tested. For example, even if an inner tracker 105 is successfully updated, the real-time object tracking system 101 can test if the estimated bounding box will give correct information. FIG. 22 shows a flowchart 2200 of the testing process. For example, at step 2201, an inner tracker 105 gives a bounding box estimate of a target object. At step 2203, the real-time object tracking system 101 first crops an image using the estimated bounding box, then a) (if a Re-ID model (e.g. a model 607) is available at step 2005) sends the cropped image to the Re-ID model (at step 2207) to generate an embedding of the cropped image, and/or b) sends the cropped image to an image classifier (if available at steps 2209) to produce its confidence score respectively (at step 2211). If a custom Re-ID model is trained for a specific class of target object, e.g., a person, the embedding and confidence score can be generated simultaneously. If a custom-trained Re-ID model is not available, the real-time object tracking system 101 may use any image classifier that is pre-trained for the classes of target objects. If a confidence score is produced and exceeds a pre-defined threshold (e.g., 0.65 or any other selected value), the real-time tracking system 101 may accept the estimated bounding box for the next step in the test.

The real-time object tracking system 101 then calculates a distance (e.g. difference or similarity) between the embedding of the cropped image and the embeddings stored in the tracklet or symbol (at step 2213). If a similarity distance is also less than a pre-defined threshold, the bounding box estimate is deemed to pass the test (at steps 2215 and 2217). In addition, the real-time object tracking system 101 will also calculate a color histogram of the cropped image and use a distance between the current and previous color histograms as a color similarity metric to determine a validity of the current bounding box estimate (at steps 2219 and 2221). The real-time object tracking system 101 can use different criteria in the test of the bounding box estimated by the inner tracker 105 (at step 2215). If the bounding box fails the test, the inner tracker 105 will be stopped. If the bounding box estimate passes the test, the corresponding embedding and color histogram is stored in the symbol for later use (at step 2217).

Note that the testing of bounding box estimates can be done intelligently. In one example, the sizes of the bounding boxes estimated by ROI trackers may have large variations from frame to frame. For example, if a current size of the bounding box becomes smaller than the one in the previous frame, the real-time object tracking system 101 can crop out a larger portion of the image at the center of the current bounding box for image classification. If a Kalman filter (e.g., Unscented Kalman Filter (UKF)) is used for motion prediction including bounding boxes, a smoothed bounding box estimate may be employed in the testing process.

Returning to step 2107 of FIG. 21, if the current frame is an annotated frame, the real-time object tracking system 101 predicts locations of active symbols in the current frame and correct the predictions (step 2109). In one example, a motion model is used for each active symbol to predict its location in the next frame. The real-time object tracking system 101 can use, for instance, Unscented Kalman Filter (UKF), or a simple model based on the assumption of constant speed. The location prediction from the motion model is also corrected using the output of the inner tracker 105 if the bounding box estimate passes the above test and is deemed to be sufficiently reliable. For example, the real-time object tracking system 101 calculates an IoU (Intersection over Union) between the bounding box predicted by the motion model and the bounding box estimated by the inner tracker 105. If the IoU value is greater than a pre-defined threshold (e.g., 0.5 or any other designated value), the real-time object tracking system 101 can use the bounding box estimated by the inner tracker 105 on the current frame as the prediction. Otherwise, the real-time object tracking system 101 can use another method such as but not limited to the average (e.g., both size and center respectively) of the two bounding box estimates as the prediction.

At step 2111, the real-time object tracking system 101 associates Active|Tracked symbols to instances. FIG. 23 illustrates data association between the active symbols and new detected instances in the current frame given an annotated frame. In the bi-partite graph 2300, the solid lines indicate successful mappings between active symbols 1-K and detected instances 1-A while the dashed lines designate the rejected associations. In various example embodiments, the association can be based on spatial and temporal constraints (e.g., the motion model can provide a prediction of each symbol's location in the current frame and a reasonable assumption is made that trajectories of the objects will not change significantly from frame to frame) as well as appearance similarities (the real-time object tracking system 101 can also assume that an appearance of an object will not change significantly in consecutive frames).

It is contemplated any data association algorithm can be used according to the examples described herein. For example, the real-time object tracking system 101 can use any efficient and effective method for data association (e.g., the Hungarian algorithm for combinatorial optimization problems).

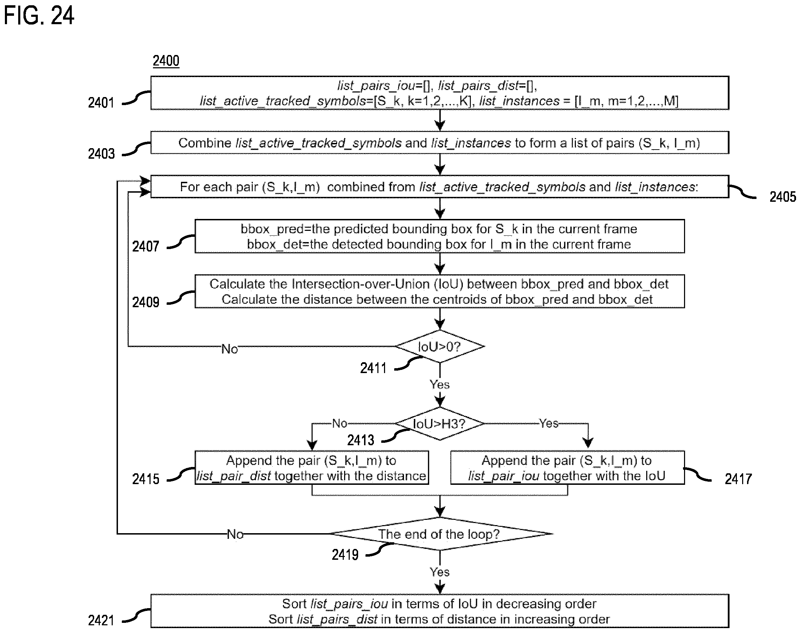

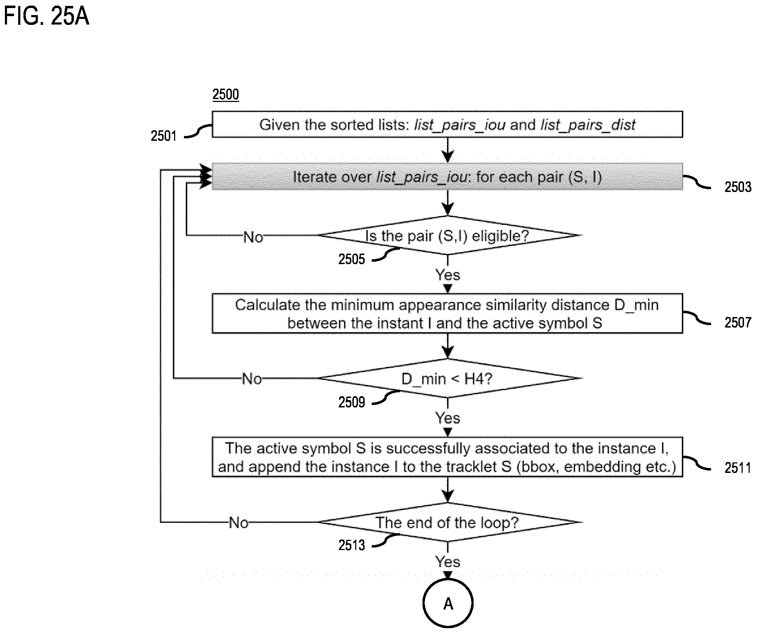

In one example, the real-time object tracking system 101 provides a greedy algorithm to show how data association works in the outer tracking loop. The greedy algorithm may lead to sub-optimal performance with less computational efforts than a globally optimal solution. FIG. 24 and FIGs. 25A-25C show steps in a greedy algorithm, according to various example embodiments. More specifically, FIG. 24 is a flowchart 2400 for pairing active symbols in a tracked sub-state with candidate instances for a greedy data association algorithm, and FIGs. 25A-25C is a flowchart 2500 of a greedy algorithm for associating active symbols in a tracked sub-state to candidate instances.

For example, at step 2401 of FIG. 24, the real-time object tracking system 101 first pairs the active symbols (S) in the Tracked sub-state (*list_active_tracked_symbols*=[S_k, k=1,2,...,K]) with candidate instances (I) (*list_instances*=[1*_*m*,* m=1,2,...,M]) according to the IoU (*list_pairs_iou*=[]) and distance (*list_pairs_dist*=[])*.* In one example, all possible pairs of data associations between the active symbols (*list active tracked symbols*=[S_k, k=1,2,...,K]) and candidate instances (*list_instances*=[I_m*,* m=1,2,...,M]) are combined to form a list of pairs (*S_k, I_m*) (at step 2403). In one example, two sorted lists of the pairs will be generated from the list of pairs, e.g., one list according to IoU (*list_pairs_iou*=[]) and another list according to distance (*list_pairs_dist*=[])*.* In one example, the two lists are generated by iterating over the list of pairs such that for each pair (*S_k, I_m*) in the list of pairs, the real-time obj ect tracking system 101 performs steps 2405 through 2419 as described below.

At step 2407, given a pair (*S_k, I_m*), a predicted bounding box (*bbox_pred*) for *S_k* and a detected bounding box (*bbox_det*) for *I_m* in a current frame is obtained. In one example, if instance segmentation is performed during the DNN inference for object detection, binary masks will be provided for *S_k* and *I_m,* and the binary masks can be used to get the foremost contours of the tracked object and instance (step 2407). At step 2409, the Intersection-over-Union (IoU) between an active symbol (*S_k*) and an instance (*I_m*) can be calculated based on their bounding boxes and/or contours determined from instance segmentation.

At step 2411, the real-time object tracking system 101 determines whether the calculated IoU is greater than 0 (i.e., indicating that there is some overlap between the bounding boxes and/or contours of *S_m* and *I_m*)*.* If the IoU is not greater than 0 (i.e., no overlap), the process returns to step 2405 to evaluate the next pair in the list of pairs. If the IoU is greater than 0, the real-time object tracking system 101 determines whether the IoU is greater than a pre-defined threshold (H3) (e.g., H3=0.05 or any other designated value) (at step 2413). In one example, the pre-defined threshold H3 can be determined separately for bounding boxes and contours. If the IoU is greater than the pre-defined threshold H3, the pair (*S_k, I_m*) is appended to *list_pairs_dist* together with a calculated distance (step 2415). If the IoU is not greater than the pre-defined threshold H3, the pair (*S_k, I_m*) is appended to *list_pairs_iou* together with the IoU. This results in populating the two lists (*list_pairs_dist* and *list_pairs_iou*) with respective pairs (*S_k,* and *I_m*)*.*

At step 2419, the real-time object tracking system 101 determines whether to end the loop of processing pairs in the list of pairs. For example, the loop ends when all pairs or a threshold number of pairs in the list of pairs have been processed. If the processing loop is not ended, the real-time object tracking system 101 returns to step 2405 to process the next pair in the list. At step 2421, if the process loop ends, the real-time object tracking system 101 sorts the two lists (*list_pair_dist* and *list_pair iou*) for output. For example, the *list_pairs_iou* is sorted in terms of IoU in decreasing order, and the *list_pairs_dist* is sorted in terms of distance in increasing order.

In the process 2500 of FIGs. 25A-25C, the minimum similarity distance between an active symbol and its candidate instance is computed based on the feature representations (e.g., the embeddings). At step 2501 of FIG. 25A, the process 2500 receives the two sorted lists (*list_pair distance* and *list_pair_iou*) generated according to the various examples of FIG. 24. At step 2503, the real-time object tracking system 101 first iterates over the pairs (*S, I*) in the *list_pairs_iou* by performing the steps described as follows. At step 2505, the real-time object tracking system 101 determines whether a given pair (*S*, *I*) is eligible for processing. In one example, the eligibility is determined by evaluating whether symbol *S* of the pair is not yet associated to any instance and instance *I* of the pair is not yet associated with any symbol. If either of *S* or *I* is already associated, the pair is not eligible, and the process 2500 returns to step 2503 to process another pair in the *list_pairs_iou.* If eligible, the process 2500 continues to step 2507.

At step 2507, the real-time object tracking system 101 calculates a minimum appearance similarity distance *D min* between the instance *I* and the active symbol *S.* In one example, an active symbol *S* (e.g., tracklet) may contain multiple embeddings from previous frames and its candidate instance *I* will have a single embedding. *D min* is then, for instance, calculated as the shortest distance in the embedding space. For example, the real-time object tracking system 101 assumes that the embeddings associated with *S* and *I* have been normalized (e.g., each vector's length is unit 1). Let Emb_n, n=1,2,...,L be the embeddings stored in the active symbol *S,* and EmbO the instance *I*'s embedding, respectively. The Euclidean distance between the embeddings Emb_n and EmbO, D_n, is calculated, n = 1,2, ..., L. The similarity distance between the symbol and instance is min {D_n, n=1,2,...,L}. In one example, a tracklet may store the embeddings from the most recent frames over a limited time window to control computational demands.

At step 2509, the real-time object tracking system 101 determines whether *D min* for the pair is below a designated threshold H4. By way of one example, the threshold H4 is determined based on a Re-ID model in use (e.g., H4=0.5 or any other designated value). If *D min* is not less than H4, then the process 2500 returns to step 2503 to process another pair in the list. At step 2511, if *D min* is less than H4, then the active symbol *S* is successfully associated to the instance *I* in the pair. The real-time object tracking system 101 then adds the instance *I* to the active symbol *S* by appending the instance *I* to the symbol *S* (e.g., bounding box, embedding, etc.) and marks the active symbol *S* and instance *I* as "associated."

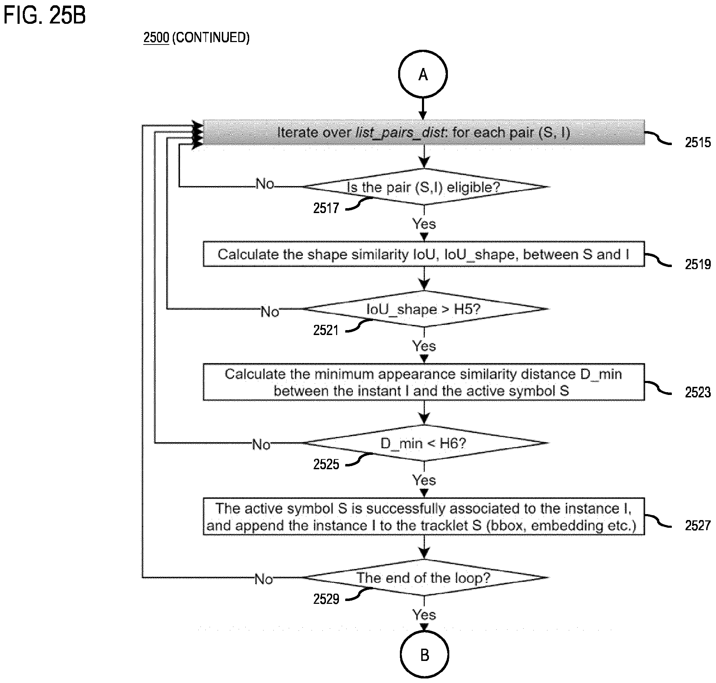

At step 2513, the real-time object tracking system 101 determines whether the loop for processing the *list_pairs_iou* should end (e.g., based on all or a threshold number of pairs in the list having been processed). If the loop is not ended, the process 2500 returns to step 2503 to process another pair in the *list_pairs_iou.* If the loop is ended, the process continues to step 2515 in FIG. 25B.

At step 2515, the real-time object tracking system 101 next iterates over the pairs (*S, I*) in the *list_pairs_dist* by performing the steps described as follows. At step 2517, the real-time object tracking system 101 determines whether a given pair (*S*, *I*) is eligible for processing. As described with respect to step 2505, in one example, the eligibility is determined by evaluating whether symbol *S* of the pair is not yet associated to any instance and instance *I* of the pair is not yet associated with any symbol. If either of *S* or *I* is already associated, the pair is not eligible, and the process 2500 returns to step 2515 to process another pair in the *list_pairs_dist.* If eligible, the process 2500 continues to step 2519.

At step 2519, the real-time object tracking system 101 calculates the shape similarity IoU (*IoU Shape*) between *S* and *I*. By way of one example, for two bounding boxes, the shape similarity IoU is defined as the IoU between the two boxes when their upper-left corners are aligned, alternatively, any other corners can be also used. In other words, the left upper corners of the *bbox_pred* of the active symbol *S* and the *bbox_det* of the instance *I* can be aligned and then the IoU calculated following the alignment. At step 2521, the real-time obj ect tracking system 101 determines whether the calculated *IoU Shape* is greater than a pre-defined threshold H5 (e.g., 0.35 or any other designated value). If the *IoU Shape* is not greater than H5 then the process 2500 returns to step 2515 to process another pair in the *list_pairs_dist.*

At step 2523, if the *IoU Shape* is greater than H5, then the real-time object tracking system 101 calculates a minimum appearance similarity distance *D min* between the instance *I* and the active symbol *S* as, for example, in step 2507. In one example, an active symbol *S* (e.g., tracklet) may contain multiple embeddings from previous frames and its candidate instance *I* will have a single embedding. *D min* is then, for instance, calculated as the shortest distance in the embedding space. For example, the real-time object tracking system 101 assumes that the embeddings associated with *S* and *I* have been normalized (e.g., each vector's length is unit 1). Let Emb_n, n=1,2,...,L be the embeddings stored in the active symbol *S,* and EmbO the instance *I*'s embedding, respectively. The Euclidean distance between the embeddings Emb_n and EmbO, D_n, is calculated, n = 1,2, ..., L. The similarity distance between the symbol and instance is min {D_n, n=1,2,...,L}. In one example, a tracklet may store the embeddings from the most recent frames over a limited time window to control computational demands.

At step 2525, the real-time object tracking system 101 determines whether *D min* for the pair is below a designated threshold H6. By way of example, the threshold H6 is determined based on a Re-ID model in use (e.g., H6=0.5 or any other designated value). If *D min* is not less than H6, then the process 2500 returns to step 2515 to process another pair in the list. At step 2527, if *D min* is less than H6, then the active symbol *S* is successfully associated to the instance *I* in the pair. The real-time object tracking system 101 then adds the instance *I* to the active symbol *S* by appending the instance *I* to the symbol *S* (e.g., bounding box, embedding, etc.) and marks the active symbol *S* and instance *I* as "associated."

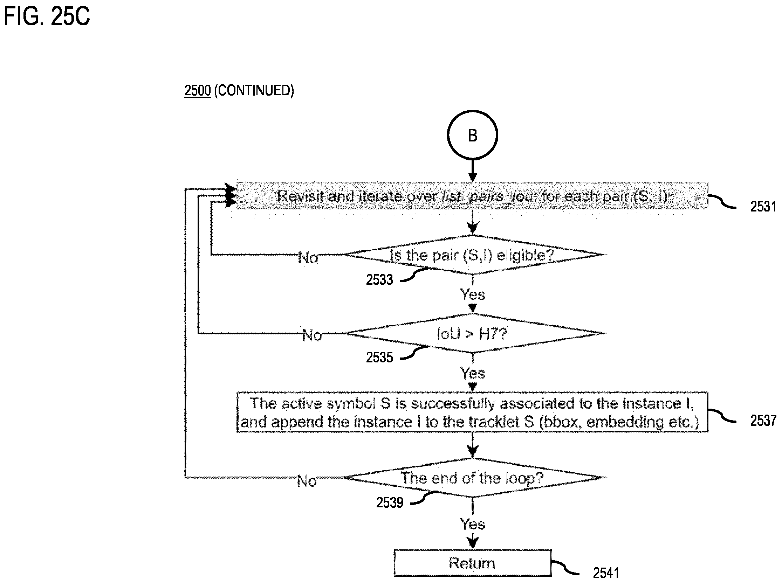

At step 2529, the real-time object tracking system 101 determines whether the loop for processing the *list_pairs_dist* should end (e.g., based on all or a threshold number of pairs in the list having been processed). If the loop is not ended, the process 2500 returns to step 2515 to process another pair in the *list_pairs_iou.* If the loop is ended, the process continues to step 2531 in FIG. 25C.

At step 2531 of FIG. 25C, the real-time tracking object tracking system 101 revisits and iterates over the *list_pairs_iou* by calculating an IoU instead of a *D min* value. As before, at step 2505, the real-time object tracking system 101 determines whether a given pair (*S*, *I*) is eligible for processing. In one example, the eligibility is determined by evaluating whether symbol S of the pair is not yet associated to any instance and instance *I* of the pair is not yet associated with any symbol. If either of *S* or *I* is already associated, the pair is not eligible, and the process 2500 returns to step 2531 to process another pair in the *list_pairs_iou.* If eligible, the process 2500 continues to step 2535.

At step 2535, the real-time object tracking system 101 determines whether the IoU of the *S* and *I*in the pair is greater than a pre-defined threshold H7 (e.g., H7=0.45 or any other designated value). If *IoU* is not greater than H7, then the process 2500 returns to step 2531 to process another pair in the list. At step 2537, if IoU is greater than H7, then the active symbol *S* is successfully associated to the instance *I* in the pair. The real-time object tracking system 101 then adds the instance *I* to the active symbol *S* by appending the instance *I* to the symbol *S* (e.g., bounding box, embedding, etc.) and marks the active symbol *S* and instance *I* as "associated." In one example, the real-time object tracking system 101 can use spatial and/or temporal constraints on the trajectory of the tracked object rather than appearance features to associate *S* and *I*in a given pair.

At step 2539, the real-time object tracking system 101 determines whether the loop for processing the *list_pairs_iou* should end (e.g., based on all or a threshold number of pairs in the list having been processed). If the loop is not ended, the process 2500 returns to step 2531 to process another pair in the *list_pairs_iou.* If the loop is ended, the process ends at step 2541.

Note that in the various example described above, if a list of target objects, TARGET_OBJECTS, is defined and it is not empty, the active symbols not in the list will be stopped and put into the inactive state.

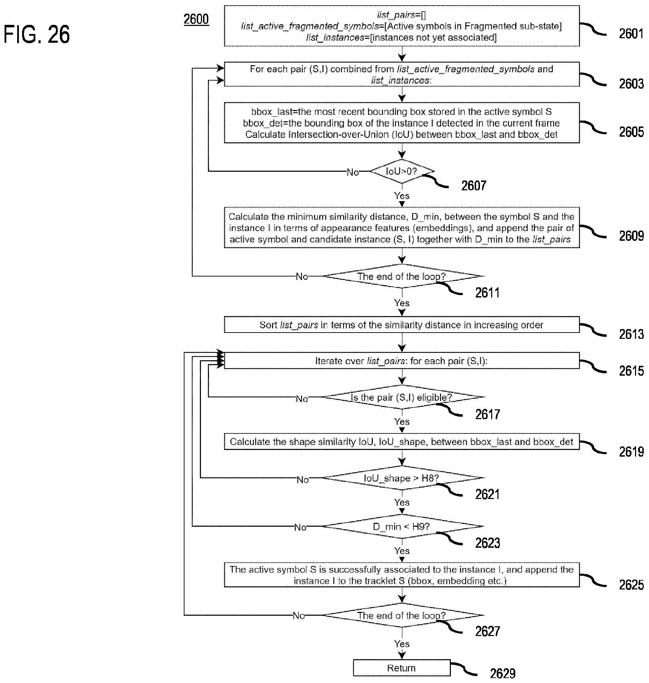

Returning to steps 2111-2117 of FIG. 21, the real-time object tracking system 101 iteratively associates Active|Fragmented symbols to instances until there are no remaining unassociated instances. In one example, a greedy algorithm is illustrated in the process 2600 of FIG. 26 for associating the active symbols in Fragmented sub-state to the candidate instances. The difference of the process 2600 of FIG. 26 from the above is that the list of candidate pairs is sorted in terms of appearance similarity instead of IoU or geometry distance as in FIG. 24 and FIGs. 25A-25C**Error! Reference source not found.**

In step 2601, the real-time object tracking system 101 combines active symbols *S* that are in a Fragmented sub-state (*list_active_fragmented symbols)* with candidate instances *I* that are not yet associated (*list_*instances=[instances not yet associated]) to generate possible combination of pairs (*S, I*) in a list of pairs (*list_pairs*=[])*.* For a given pair (*S*, *I*) (at step 2603), the real-time object tracking system 101 calculates an IoU between the most recent bounding box (*bbox_last*) stored in the active symbol *S* and the bounding box (*bbox_det*) of the instance *I* detected in a current frame (at step 2605). In one example, if instance segmentation is performed, the contours of the detected object in the *S* and *I* can be used in place of or in addition to their respective bounding boxes.

At step 2607, the real-time object tracking system 101 determines whether the calculated IoU is greater than 0 (i.e., indicating that there is some overlap between the bounding boxes and/or contours of *S_m* and *I_m*). If the IoU is not greater than 0 (i.e., no overlap), the process returns to step 2603 to evaluate the next pair in the list of pairs. If the IoU is greater than 0, the real-time object tracking system 101, the real-time object tracking system 101 calculates the minimum similarity distance *D min* between the symbol *S* and instance *I* in terms of appearances features (e.g., encoded in an embedding - i.e., a high dimensional vector of encoding the appearance features) (at step 2609). The pair of active symbol *S* and candidate instance *I* along with the calculated *D min* are also appended to the *list_pairs.*

At step 2611, the real-time object tracking system 101 determines whether the loop for processing the list of pairs should end (e.g., based on all or a threshold number of pairs in the list having been processed). If the loop is not ended, the process 2600 returns to step 2603 to process another pair in the list of pairs. If the loop is ended, the process continues to step 2613.

At step 2613, the *list_pair* generated above is sorted in terms of similarity distance (e.g., in increasing order so that the most similar instance goes first in the list). Then at step 2615, the real-time object tracking system 101 iterates over *list_pairs* such that for a given pair (*S*, *I*), the following steps are performed.

At step 2617, the real-time object tracking system 101 determines whether a given pair (*S*, *I*) is eligible for processing. In one example, the eligibility is determined by evaluating whether symbol *S* of the pair is not yet associated to any instance and instance *I* of the pair is not yet associated with any symbol. If either of *S* or *I* is already associated, the pair is not eligible, and the process 2600 returns to step 2615 to process another pair in the *list_pairs.* If eligible, the process 2600 continues to step 2619.

At step 2619, the real-time object tracking system 101 calculates the shape similarity IoU (*IoU Shape*) between *bbox_last* of *S* and *bbox det* of *I*. By way of example, for two bounding boxes, the shape similarity IoU is defined as the IoU between the two boxes when their upper-left corners are aligned; alternatively, any other corners can be also used. In other words, the left upper corners of the *bbox_last* of the active symbol *S* and the *bbox_det* of the instance *I* can be aligned and then the IoU calculated following the alignment.

At step 2621, the real-time object tracking system 101 determines whether the calculated *IoU Shape* is greater than a pre-defined threshold H8 (e.g., 0.45 or any other designated value). If *IoU Shape* is not greater than H8 then the process 2600 returns to step 2615 to process another pair in the *list_pairs.* If *IoU Shape* is greater than H8, then the real-time object tracking system 101 determines whether *D_min* (e.g., as calculated at step 2609) is less than a predefined threshold H9. By way of example, the threshold H9 is determined based on a Re-ID model in use (e.g., H9=0.5 or any other designated value). If *D min* is not less than H9, then the process 2600 returns to step 2615 to process another pair in the list. At step 2623, if *D min* is less than H9, then the active symbol *S* is successfully associated to the instance *I* in the pair. Then at step 2625, The real-time object tracking system 101 then adds the instance *I* to the active symbol *S* by appending the instance *I* to the symbol S (e.g., bounding box, embedding, etc.) and marks the active symbol *S* and instance *I* as "associated."

At step 2627, the real-time object tracking system 101 determines whether the loop for processing the *list_pairs* should end (e.g., based on all or a threshold number of pairs in the list having been processed). If the loop is not ended, the process 2600 returns to step 2615 to process another pair in the *list_pairs.* If the loop is ended, the process ends and returns at step 2629.

Returning to step 2119 in FIG. 21, the real-time object tracking system 101 initiates new symbol for any unassociated instance remaining after the steps above. For example, if an instance is not associated with any active symbol, the real-time object tracking system 101 can first search the inactive symbols and find a possible match to the instance based on appearance similarities and some reasonable spatial and temporal constraints. If a match is found, an ID number of the symbol will be re-assigned to the instance. For still an unassociated instance, the real-time object tracking system 101 will assign a new unique ID to the instance and store its attributes (e.g., bounding box, embedding, and color histogram etc.). For example, see FIG. 18 for additional details.

Note that if a list of target obj ects, TARGET_OBJECTS, is defined, and it is not empty, the real-time object tracking system 101 will not initiate any new symbol.

In step 2121, the real-time object tracking system 101 re-initiates inner trackers 105 for active symbols. For example, if an active symbol has been successfully associated to an instance detected in the current frame, the old inner tracker 105 (e.g., ROI tracker) will be discarded. According to the number of active symbols and the computational resources available, the type of inner tracker 105 (e.g., ROI tracker) is chosen and a new inner tracker 105 of this type is created. The new inner tracker 105 is initiated using the new bounding box and the current image. If the inner tracker 105 is successfully initiated, it will be added to the active symbol (e.g., tracklet). Otherwise, no inner tracker 105 will be attached to the active symbol. In one example, every inner tracker 105 has a stopwatch which is reset when the inner tracker is re-initiated. The stopwatch will be incremented by 1 if the inner tracker 105 is successfully updated on the current image.

In step 2123, the real-time object tracking system 101 update symbol states. For example, based on the results of data association and initiation/re-initiation for inner trackers 105, the states of the active symbols will be updated as shown in FIGs. 16 and 17.

In one example, for a plain frame, if an active symbol's inner tracker is successfully updated on the current image, and the bounding box estimate passes the test, the bounding box, and the feature representations (e.g., embedding and color histogram generated on the cropped image) will be appended to the symbol (e.g., tracklet).

In one example, for an annotated frame, if an active symbol does not connect to any instance detected in the current frame but its inner tracker is successfully updated, and the bounding box estimate passes the test, the bounding box, and the feature representations (embedding and histogram) will be also appended to the active symbol.

At step 2125, the real-time object tracking system 101 updates the motion model for each active symbol. For example, after an active symbol is successfully associated to an instance in the current frame, the symbol's motion model will be updated using the new bounding box. In the case of plain frame without detection result, the inner trackers 105 of the active symbols will be updated using the current image (at step 2127). If an active symbol's inner tracker 105 is successfully updated, the bounding box estimate can be used to update the motion model (at step 2129).

At step 2131, the real-time object tracking system 101 manages inner trackers and update symbol states. For example, in the case of false negative errors, the DNN model used for object detection may fail to detect the target objects in many consecutive frames and the real-time object tracking system 101 will rely on inner tracking to keep track of the objects. To find out whether or not an inner tracker 105 is drifting away from the target object, the real-time obj ect tracking system 101 tests the bounding box estimated by the inner tracker 105 as shown in FIG. 22. Once an inner tracker 105 is deemed drifting, the active symbol's sub-state will transition from Tracked to Fragmented as shown in FIG. 17. Sometimes, particularly in a crowded scene, two or more inner trackers 105 may drift away from their initial target objects and stick to the same object. If this occurs, the real-time object tracking system 101 can merge these inner trackers 105 at large.

According to various example embodiments, the flowchart 2700 of FIGs. 27A and 27B gives the steps for merging inner trackers at large based on Non-Maximum Suppression (NMS) technique, according to one example. At step 2701, the real-time object tracking system 101 initializes a list of inner trackers at large (*list_inner_trackers_at_large*=[]) and a list of candidate inner trackers at large to combine (*list_comb_inner_trackers_at_large*=[]) as empty sets. At step 2703, the real-time object tracking system 101 iterates over the active symbols that are in a Tracked sub-state by performing the following steps. At step 2705, the real-time object tracking system 101 determines whether a symbol's inner tracker is enabled and whether its stopwatch is greater than a pre-defined threshold N1. In other words, when a symbol's inner tracker is enabled, its timer "stopwatch" is checked to determine whether the stopwatch reaches or goes beyond a pre-defined threshold (e.g., N1=5). If the stopwatch is not greater than or equal to the threshold N1, the process 2700 returns to step 2703 to process the next active symbol in the Tracked sub-state. At step 2707, if the symbol's stopwatch is greater than or equal to the threshold N1, the active symbol is appended to the *list_inner_trackers_at_large* which indicates that the symbol may be at large.

At step 2709, the real-time object tracking system 101 determines whether the loop for determining inner trackers at large should end (e.g., based on process all or a threshold number of active symbols in a Tracked sub-state). If the loop is not ended, the process returns to step 2703 to process another active symbol. Otherwise, the process 2700 proceeds to step 2711.

At step 2711, if the *list_inner_trackers_at_large* is not empty, the real-time object tracking system 101 iterates over the *list_inner_trackers_at_large* to determine whether any two symbols (*S_i, S_j*) in the list can be combined because they are tracking the same object. At step 2713, for a given pair of symbols *S_i* and *S_j* in the list, an IoU between *S_i* and *S_j* is calculated using, for instance, their respective latest bounding boxes (or contours if instance segmentation is performed). At step 2715, the real-time object tracking system 101 determines whether the calculated IoU is greater than a pre-defined threshold H10 (e.g., 0.5 or any other designated value). If the IoU is not greater than H10, the process 2700 returns to 2711 to process another pair of symbols. If the IoU is greater than H10, at step 2717, the combination of *S_i* and *S_j* is appended to the *list_comb_inner_trackers_at_large* together with the IoU indicating that symbols *S_i* and *S_j* may belong to the same object.

At step 2719, the loop iterating over the *list_inner_trackers_at_large* can be ended when all or a threshold number of eligible combinations of symbols are evaluated. If additional combinations remain, then the process 2700 returns to step 2711 to evaluate the next pair of possible symbols to combine. If not, the loop ends, and the process 2700 continues to step 2721 in FIG. 27B.

At step 2721 in the FIG 27B, the real-time object tracking system 101 sorts the *list_comb_inner_trackers_at_large* in terms of IoU (e.g., in decreasing order so that the combinations of symbols with larger IoUs go first). At step 2723, the real-time object tracking system 101 determines whether the *list_comb_inner_trackers_at_large* is empty. If yes, the process 2700 ends and returns at step 2725. If no, at the 2727, the front item in the *list_comb_inner_trackers_at_large* (*S_i, S_j*) is taken and removed. According to the sort order of the example above, the front combination of symbols has the largest IoU.

At step 2729, both *S_i* and *S_j* removed from the list are checked to determine whether they are still in active and in the Tracked sub-state, e.g., in case the symbol(s) may have been put into Active|Fragmented state. If either or both of the symbols are no longer Active|Tracked, the process returns step 2723 to evaluate the next combination in the list (if any). If both are still in the Active|Tracked state, the real-time object tracking system 101 determines which symbol's inner tracker was started earlier by checking whether *S_i*'s stopwatch is greater than *S_j*'s stopwatch. If *S_i*'s stopwatch is greater than *S_j*'s stopwatch, then *S_i*'s inner tracker is disabled and its TIMER_FRAG is started. If *S_i*'s stopwatch is not greater than *S_j*'s stopwatch, then *S_j*'s inner tracker is disabled and its TIMER_FRAG is started. In other words, the real-time object tracking system 101 keeps the later started inner tracker and discards the earlier started one according to one example. The process 2700 then returns to step 2723 to process additional combinations of symbols (if any).

Returning to step 2133 in FIG. 21, the real-time object tracking system 101 collects primary and/or secondary tracking information. In one example, after a frame is fed into the tracking algorithm together with the detection result, the tracking information will be collected and reported. As used herein, for an annotated frame, the output is called primary tracking information, and for a plain frame, the output is called secondary tracking information. Note that even for an annotated frame, some target objects may be missed due to false negative errors. Therefore, both the primary and secondary tracking information may be reported for an annotated frame.

In summary, from the above descriptions, the real-time object tracking system 101 provides for at least the following features:
- Outer tracking is based on object detection result and re-identification model for data association from frame to frame;
- Inner tracking is enabled by means of ROI trackers that are running fast in real time and initiated by outer tracking based on the object detection result;
- In the case of false negative errors, the outer tracking will pause for the impacted active symbols and the inner tracking is used to provide bounding box estimates;
- In the course of miss detection, the outputs of inner tracking (e.g., bounding box estimates) can be used for updating motion models and cropping original image for feature extraction; and
- If the inner trackers are successfully updated on the current image, the estimated bounding boxes can be used to correct the location predictions based on the motion models and facilitate the data association for outer tracking.

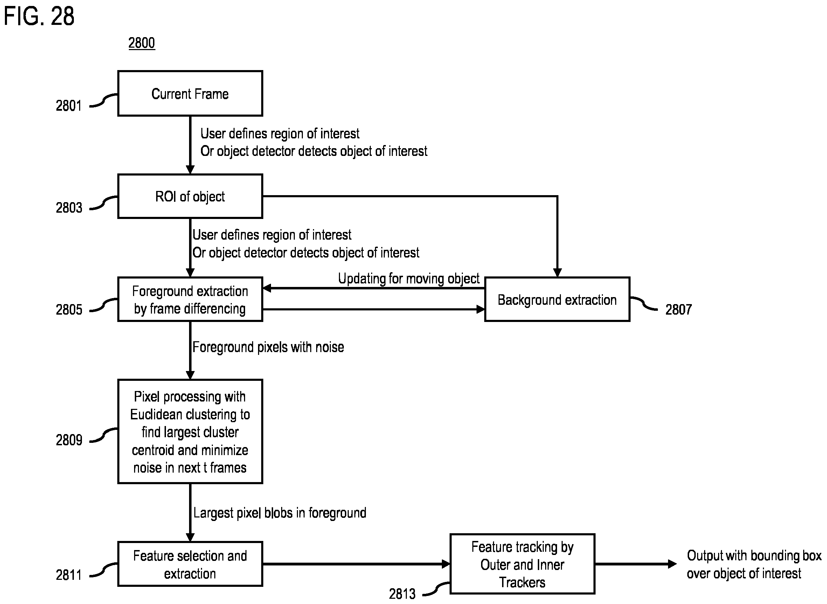

In addition, in one example, the real-time object tracking system 101 can include a pixel-based motion algorithm or equivalent algorithm to track objects continuously in the subsequent frames during occlusion or object out of frame and reappearing. For example, the pixel-based motion algorithm or equivalent is used for object detection when the DNN is not available. The various examples of the outer-inner tracking mechanism are still applicable in this case. FIG. 28 shows the steps for the pixel-based approach for the motion-based detection and tracking (a process 2800) that the real-time object tracking system 101 intend to use as an alternative to the motion estimation described below. In one example, this approach may be used as an alternative to the legacy ROI trackers.

At steps 2801 and 2803, a region of interest or an object of interest of certain size within an expected range of our algorithm is defined by the user or automatically detected by the object detector in a first frame and second frame. Once this is obtained, within the region of interest, the real-time object tracking system 101 detects and extracts a foreground and background model by using consecutive frames (steps 2805 and 2807). In step 2805, the system 101 extract the foreground by differentiating background pixels and foreground pixels. Since a camera and scene both are in motion, the real-time object tracking system 101 can obtain noise in a frame differencing. The real-time object tracking system 101 apply a Euclidean clustering method or equivalent clustering method to find clusters of points in resulting pixels and to minimize noise in next frames (step 2809). A centroid of a largest cluster is chosen as a maximum motion region. This is assigned as the foreground. Using the foreground pixels properties, the real-time object tracking system 101 extract feature points and use the feature points to track the object in subsequent frames (step 2811). At step 2813, these features are then passed to the outer and inner tracking algorithm as described in the above.

In addition to the above, the real-time object tracking system 101 can provide an architecture to enable real-time object tracking module according to the various examples described herein for a moving camera, such as implemented on a handheld device, a mobile communication device, a vehicle, an unmanned aerial vehicle (UAV), a drone or a robot.

FIG. 29, in various example embodiments, shows an architecture and process 2900 for delivering an output of a decorated frame with a tracked object (step 2904), for example, for visual monitoring to a human controller and/or for further analysis and/or processing by any other entity. The process 2900 includes a capability for switching, e.g. an automatic switch, from a cloud-based architecture 2901 to an embedded on-board architecture 2903, and back, based on type and/or numbers of objects of interest or region of interest to be detected and tracked, computational resources available in and/or models used in the real-time object tracking system 101, communication network availability, a current location and/or altitude of moving camera, as well as latency or round-trip time for a processed frame in the cloud-based architecture 2901 and in the embedded on-board architecture 2903.

When a frame 2905 is received by an object tracking module client 2907 from the camera 2901, e.g. from the UAV based camera, it sends it to a Network Latency Analyzer 2909 of the client 2907to calculate a round trip time (RTT) to process the frame with a return of a location of the object (e.g. bounding box coordinates) in the frame. If the RTT 2911 is less or equal to a desired time T, the process pipeline 2900 switches to the module on the on-board processor 2903 (e.g., on UAV (unmanned aerial vehicle) or device side). If the RTT 2913 is greater than a desired time T, the process pipeline 2900 switches the Cloud 2901 for further processing of the subsequent frames for an interval I. For each interval I, the Network Latency Analyzer 2909 recalculates the RTT 2911 and/or 2913 for the current frame and picks one of the two pipelines to process the subsequent I frames. The LiteOTM 2915 is the lightweight object detector and tracking system compatible on Edge or onboard processor with limited resources (e.g., 1 GPU) in comparison to heavier weight (e.g., more than 1 GPU) resources on the OTM module 2917 of the cloud 2901. In one example, the real-time object tracking system 101 can also enable a modular architecture pipeline to enable customization based on use-cases. For example, the object detector can be swapped for a customized trained model, e.g., for a specific task and/or a specific object type, for the inner trackers 105, outer tracker 103, and/or DNN-based object detection & feature extraction 107.

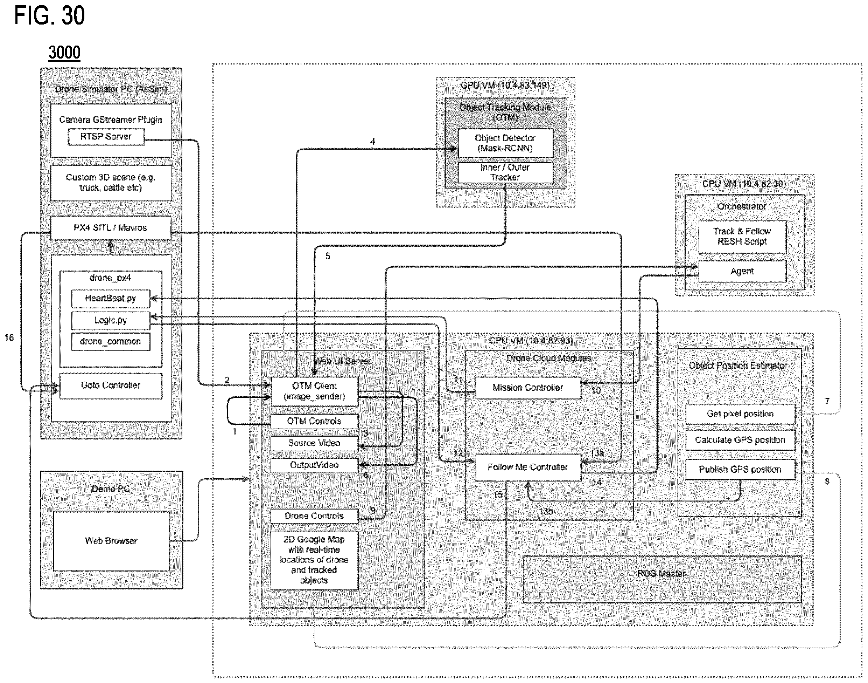

It is contemplated that various of the real-time object tracking 101 described herein can be used for any application where such tracking can be used. For example, one such example use case is a drone-based track and follow function. FIG. 30 illustrates an example architecture and process 3000 for the drone-based track and follow use case, according to one example. The example architecture and process 3000 can also be implemented in a vehicle-based track and follow use case or a mobile communication device-based track and follow use case in a similar manner. By way of example, the process 3000 includes the following steps which are numbered to correlate to the arrows indicated in FIG. 30:
(1) User, by using a user interface (UI) of Object Tracking Module (OTM) control, clicks on "start tracking" button to start the tracking pipeline. User may also enter detected object ID, object class names, or draw a ROI to track specific object. In the vehicle use case, a tracking system in the vehicle start tracking pipeline without any user input or visual display to a user.
(2) OTM Client in a web UI Server will pull a video stream from the drone or drone simulator, e.g. based on an RTSP (Real Time Streaming Protocol) protocol. In some use cases the UI can be a UI of an application installed in the vehicle or mobile communication device.
(3) The OTM Client forwards the pulled source video to web page UI to be displayed to the user. In some vehicle use cases, the source video is not displayed to the user.
(4) The OTM Client sends source video frames to an OTM pipeline/module, such as the object tracking system 101, for an analysis along with user input parameters (e.g. ROI of specific area to be tracked, one or more classes to be tracked e.g. cars, person, or object ID e.g. car 1, person 1). In the vehicle use case, the input parameters come from a related vehicle management system without any user intervention.
(5) The OTM pipeline/module sends an output of the analysis (e.g. one or more bounding box of one or more tracked objects) to back to the OTM Client.
(6) The OTM Client forwards the output of the pulled video stream with the one or more bounding box of the one or more tracked objects to the web page to be displayed to the user. In some vehicle use cases, the source video is not displayed to the user. In the mobile communication device the source video can also be displayed on the application UI.
(7) Object Position Estimator module subscribes to / received from the output (bounding box of tracked objects) from the OTM client.
(8) The Object Position Estimator module converts pixel positions of the one or more tracked objects to related GPS positions and publishes the related GPS positions to a ROS topic. The web page subscribes to / receives the related GPS positions and display the positions of the one or more tracked objects on a map. In the vehicle use case, the input parameters come from a related vehicle management system without any user intervention. In the mobile communication device the map can also be displayed on an application UI.
(9) User clicks on a "start track and follow" button on the UI. This triggers an orchestrator agent to execute track_follow.re script. The track_follow.re script contains logic such as "take off', "go to a GPS way point" (e.g., a field in the 3D scene), and/or "activate track and follow". In the vehicle use case, the input parameters come from a related vehicle management system without any user intervention. In the mobile communication device the map can also be displayed on an application UI.
(10) The Orchestrator agent sends requests to Mission Controller according to routines defined in the track_follow.re script (e.g. "take off", "go to a GPS waypoint" and/or "start track and follow").
(11) Logic.py receives the track and follow request from the Mission Controller.
(12) The Logic.py triggers Follow Me Controller to start track and follow.
(13) The Follow Me Controller subscribes to real time GPS locations of (13a) the drone (follower) (or the vehicle or mobile communication device) and (13b) the one or more tracked objects (leader).
(14) The Follow Me Controller calculates one or more target waypoints and/or one more trajectories for the follower and sends the one or more target waypoints and/or trajectories at a high frequency to HeartBeat.py. The HeatBeat.py instructs the drone to fly/move to the received one or more target waypoints. In the vehicle use case, the HeatBeat.py can e.g. instruct the vehicle to stop, to break, to accelerate and/or to change direction to avoid to hit/meet the one or more tracked objects (leader). In the mobile communication device the map can also be displayed on an application UI.
(15) The Follow Me Controller triggers GotoController on the drone to monitor the waypoint convergences.
(16) The GotoController subscribes to the real time GPS location of the drone for convergence monitoring.

In another use case, the real-time object tracking system 101 can be used for vehicle-to-infrastructure (V2X) communication manner, e.g. for smart intersection alert for public safety. In a similar manner, the system 101 can be implemented between one or more vehicles over vehicle-to-vehicle (V2V) communication manner with cameras moving with the vehicles. Example steps of this use case is provided below:
(1) Public fixed cameras are installed with the invention, e.g. the real-time object tracking system 101, to track one or more objects in real time.
(2) Or public camera is connected to the cloud where the invention is installed.
(3) A collision prevention module uses received tracked objects bounding boxes to predict trajectory and speed prediction of each tracked object.
(4) When a potential collision is detected, the collision prevention module will trigger and alert on-board cellular devices on vehicles or pedestrian with cellular devices (e.g. smart phone, smart watch) for accident prevention alerts.

In another use case, the real-time object tracking system 101 can be used for in-vehicle object tracking. Most traditional object tracking systems are currently being deployed to monitor indoor or outdoor areas. But multi object and person tracking is also very useful in a vehicle itself, especially in modern autonomous or smart electric vehicle by the Original Equipment Manufacturer (OEM) or after-market smart camera with object tracking capabilities installed in older vehicles. Example steps of this use case is provided below:
(1) The real-time object tracking system 101 can be deployed in the onboard computer or devices, such as camera, in a vehicle.
(2) The real-time object tracking system 101 can be deployed on the cloud, connected by cellular connectivity to the onboard cameras in the vehicle.
(3) The one or more cameras provide an interior vision to detect one or more objects in the vehicle (e.g. phones at the back seat, 2 persons, one bag, one dog at the back seats).
(4) The camera provides an exterior vision to detect objects outside of the vehicle (e.g. any persons, animals, other vehicles, traffic signs, etc.).
(5) Data from the interior, exterior vision, and the V2X (mentioned in the previous section) can be used by:
   (a) The vehicle to activate certain features (e.g., alert) or for research and development to optimize or change vehicle software configurations.
   (b) The V2X to control a public infrastructure (e.g., traffic light priority based on the number of passengers in a vehicle).
   (c) The enterprises to monitor driving behavior (e.g., if a driver was eating, smoking, drinking while driving).

Returning to FIG. 1, in one example, the video sources can include one or more devices or apparatuses, for example, standalone cameras, User Equipment (UE) devices, IoT devices, and/or any other device capable of acquiring sensor information from which objects can be tracked according to the various example described herein. Such devices can include but are not limited to a mobile device, a smartphone, smart glasses, a smart visor, a mobile communication device, an infotainment device, a navigation device, a smart watch, etc. or any combination thereof. By way of example, the UEs can be any type of mobile terminal, fixed terminal, or portable terminal including a mobile handset, station, unit, device, wearables (e.g., smart glasses, augmented reality (AR) glasses, smart visor or shield), multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, including the accessories and peripherals of these devices, or any combination thereof. It is also contemplated that a UE can support any type of interface to the user (such as "wearable" circuitry, etc.). In one instance, an IoT device may include one or more remote sensor devices, a wearable, a LTE, or a combination thereof. Also, the LTEs may be configured to access the communications network by way of any known or still developing communication protocols. In one example, also the real-time object tracking system 101 with one or more of the image grabber 113 or the DNN-based object detection & feature extraction 107 can be implemented in any of the above-mentioned device or apparatus.

In one example, the LTEs include one or more device sensors (e.g., a front facing camera, a rear facing camera, digital image sensors, LiDAR (light detection and ranging) sensor, global positioning system (GPS) sensors, sound sensors, microphones, height or elevation sensors, accelerometers, tilt sensors, moisture/humidity sensors, pressure sensors, temperature sensor, barometer, NFC sensors, wireless network sensors, etc.) and clients (e.g., mapping applications, navigation applications, image processing applications, augmented reality applications, image/video application, modeling application, communication applications, etc.). In one example, GPS sensors can enable the LTEs to obtain geographic coordinates from one or more satellites for determining current or live location and time. Further, a user location within an area may be determined by a triangulation system such as A-GPS (Assisted-GPS), Cell of Origin, or other location extrapolation technologies when cellular or network signals are available.

In one example, the real-time object tracking system 101 can perform functions related to real-time object tracking as discussed with respect to the various examples described herein. In one instance, the real-time object tracking system 101 can be a standalone server or a component of another device with connectivity to the communications network. For example, the component can be part of an edge computing network where remote computing devices are installed within proximity of a geographic area of interest, one or more assets (e.g., utility company assets), or a combination thereof.

In one instance, the DNN-based object detection & feature extraction 107 of the real-time object tracking system 101 can include one or more neural networks or other machine learning algorithms/systems to process frames of an input (e.g., a video stream or multiple static images, or serial or satellite imagery) (e.g., using an image segmentation algorithm) to generate labels for pixels of the input images. In one instance, the neural network of the DNN-based object detection & feature extraction 107 is a traditional convolutional neural network (CNN) which consists of multiple layers of collections of one or more neurons (which are configured to process a portion of an input data).

In one example, the real-time object tracking system 101 has connectivity over the communications network to a services platform that provides one or more services that can use the tracking output (e.g. a tracking information 409) of the real-time object tracking system 101. By way of example, the one or more services may also include mapping services, navigation services, emergency response services, notification services, social networking services, content (e.g., audio, video, images, etc.) provisioning services, application services, storage services, contextual information determination services, augmented reality service, location-based services, information-based services (e.g., weather, news, etc.), etc. or any combination thereof.

In one example, one or more cameras, IoT devices, drones, and/or UEs may be configured with various sensors for acquiring and/or generating sensor data for real-time. For example, the sensors can capture one or more images of a geographic area and/or any other sensor data (e.g., LiDAR point clouds, infrared scans, radar scans, etc.) that can be used for real-time object tracking according to the examples described herein.

In one example, the components of the real-time object tracking system 101 may communication over a communications network that includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless communication network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

In one example, the real-time object tracking system 101 may be a platform with multiple interconnected components (e.g., a distributed framework). The real-time object tracking system 101 may include multiple servers, intelligent networking devices, computing devices, components, and corresponding software for real-time object tracking. In addition, it is noted that the real-time object tracking system 101 may be a separate entity of the system 100, a part of the one or more services, a part of the services platform, or included within devices, e.g., camera, UEs, IoT devices, or divided between any other components.

By way of example, the component of the real-time object tracking system 101 can communicate with each other and other components external to the system 101 using well known, new or still developing protocols. In this context, a protocol includes a set of rules defining how the network nodes within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing real-time object tracking using outer and inner tracking may be advantageously implemented via software, hardware (e.g., general processor, Digital Signal Processing (DSP) chip, an Application Specific Integrated Circuit (ASIC), Field Programmable Gate Arrays (FPGAs), etc.), firmware, circuitry, or a combination thereof. Such exemplary hardware for performing the described functions is detailed below.

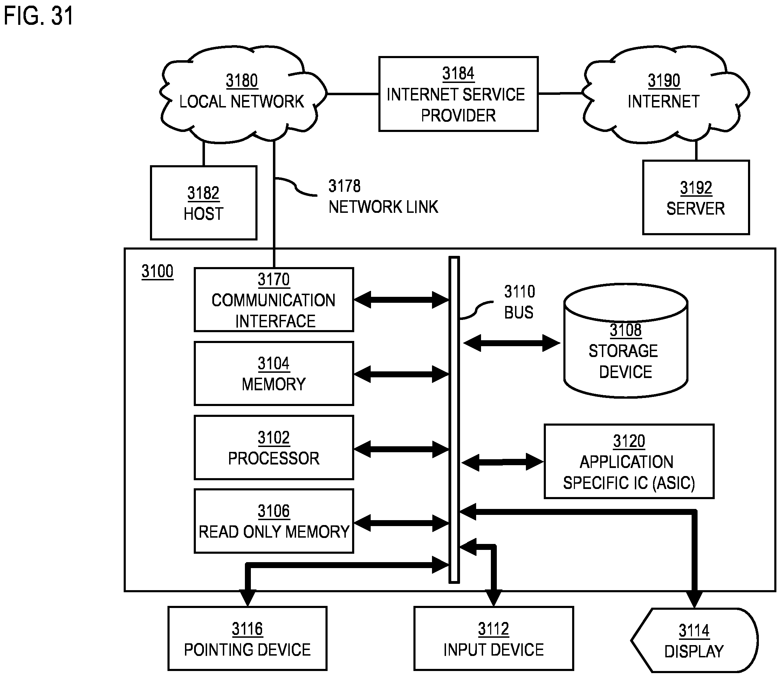

FIG. 31 illustrates a computer system 3100 upon which various example embodiments of the invention may be implemented. Computer system 3100 is programmed (e.g., via computer program code or instructions) to provide real-time object tracking using outer and inner tracking as described herein and includes a communication mechanism such as a bus 3110 for passing information between other internal and external components of the computer system 3100. Information (also called data) is represented as a physical expression of a measurable phenomenon, typically electric voltages, but including, in other examples, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some examples, information called analog data is represented by a near continuum of measurable values within a particular range.

The bus 3110 includes one or more parallel conductors of information so that information is transferred quickly among devices coupled to the bus 3110. One or more processors 3102 for processing information are coupled with the bus 3110.

One or more processors 3102 perform a set of operations on information as specified by one or more computer program code related to providing real-time object tracking using outer and inner tracking. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 3110 and placing information on the bus 3110. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 3102, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 3100 also includes one or more memories 3104 coupled to the bus 3110. The memory 3104, such as a random access memory (RAM) or other dynamic storage device, stores information including processor instructions for providing real-time object tracking using outer and inner tracking. Dynamic memory allows information stored therein to be changed by the computer system 3100. RAM allows a unit of information stored at a location called a memory address to be stored and retrieved independently of information at neighboring addresses. The memory 3104 is also used by the processor 3102 to store temporary values during execution of processor instructions. The computer system 3100 also includes one or more read only memories (ROM) 3106 or other static storage devices coupled to the bus 3110 for storing static information, including instructions, that is not changed by the computer system 3100. Some memory is composed of volatile storage that loses the information stored thereon when power is lost. Also coupled to the bus 3110 is one or more non-volatile (persistent) storage devices 3108, such as a magnetic disk, optical disk, or flash card, for storing information, including instructions, that persists even when the computer system 3100 is turned off or otherwise loses power.

Information, including instructions for providing real-time object tracking using outer and inner tracking, is provided to the bus 3110 for use by the processor from an external input device 3112, such as a keyboard containing alphanumeric keys operated by a human user, or a sensor. A sensor detects conditions in its vicinity and transforms those detections into physical expression compatible with the measurable phenomenon used to represent information in the computer system 3100. Other external devices coupled to the bus 3110, used primarily for interacting with humans, include a display device 3114, such as a cathode ray tube (CRT) or a liquid crystal display (LCD), or plasma screen or printer for presenting text or images, and a pointing device 3116, such as a mouse or a trackball or cursor direction keys, or motion sensor, for controlling a position of a small cursor image presented on the display 3114 and issuing commands associated with graphical elements presented on the display 3114. In various example embodiments, for example, in which the computer system 3100 performs all functions automatically without human input, one or more of external input device 3112, display device 3114 and pointing device 3116 is omitted.

In the various illustrated example embodiment, special purpose hardware, such as one or more application specific integrated circuits (ASIC) 3120, is coupled to the bus 3110. The special purpose hardware is configured to perform operations not performed by the processor 3102 quickly enough for special purposes. Examples of application specific ICs include graphics accelerator cards for generating images for the display 3114, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

The computer system 3100 also includes one or more instances of a communications interface 3170 coupled to the bus 3110. The communication interface 3170 provides a one-way or two-way communication coupling to a variety of external devices that operate with their own processors, such as printers, scanners, and external disks. In general, the coupling is with a network link 3178 that is connected to a local network 3180 to which a variety of external devices with their own processors are connected. For example, the communication interface 3170 may be a parallel port or a serial port or a universal serial bus (USB) port on a personal computer. In some examples, the communications interface 3170 is an integrated services digital network (ISDN) card or a digital subscriber line (DSL) card or a telephone modem that provides an information communication connection to a corresponding type of telephone line. In some examples, the communication interface 3170 is a cable modem that converts signals on the bus 3110 into signals for a communication connection over a coaxial cable or into optical signals for a communication connection over a fiber optic cable. As another example, the communications interface 3170 may be a local area network (LAN) card to provide a data communication connection to a compatible LAN, such as Ethernet. Wireless links may also be implemented. For the wireless links, the communications interface 3170 sends or receives or both sends and receives electrical, acoustic, or electromagnetic signals, including infrared and optical signals, that carry information streams, such as digital data. For example, in wireless handheld devices, such as mobile telephones like cell phones, the communications interface 3170 includes a radio band electromagnetic transmitter and receiver called a radio transceiver. In certain examples, the communications interface 3170 enables connection to a communication network for providing real-time object tracking using outer and inner tracking.

The term computer-readable medium is used herein to refer to any medium that participates in providing information to the processor 3102, including instructions for execution. Such a medium may take many forms, including, but not limited to, non-volatile media, volatile media, and transmission media. Non-volatile media include, for example, optical or magnetic disks, such as storage device 3108. Volatile media include, for example, dynamic memory 3104. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

The network link 3178 typically provides information communication using transmission media through one or more networks to other devices that use or process the information. For example, the network link 3178 may provide a connection through local network 3180 to a host computer 3182 or to an equipment 3184 operated by an Internet Service Provider (ISP). The ISP equipment 3184 in turn provides data communication services through the public, world-wide packet-switching communication network of networks now commonly referred to as the Internet 3190.

A computer called a server host or a server 3192 connected to the Internet hosts a process that provides a service in response to information received over the Internet. For example, the server host 3192 hosts a process that provides information representing video data for presentation at the display 3114. It is contemplated that the components of system can be deployed in various configurations within other computer systems, e.g., the host 3182 and the server 3192.

FIG. 32 illustrates a chip set 3200 upon which various example embodiment of the invention may be implemented. The chip set 3200 is programmed to provide real-time object tracking using outer and inner tracking as described herein and includes, for instance, the processor and memory components described with respect to FIG. 31 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain examples the chip set can be implemented in a single chip.

In one example, the chip set 3200 includes a communication mechanism such as a bus 3201 for passing information among the components of the chip set 3200. One or more processors 3203 have connectivity to the bus 3201 to execute instructions and process information stored in, for example, a memory 3205. The processor 3203 may include one or more processing cores with each core configured to perform independently. A multi-core processor enables multiprocessing within a single physical package. Examples of the multi-core processor include two, four, eight, or greater numbers of processing cores. Alternatively or in addition, the processor 3203 may include one or more microprocessors configured in tandem via the bus 3201 to enable independent execution of instructions, pipelining, and multithreading. The processor 3203 may also be accompanied with one or more specialized components to perform certain processing functions and tasks such as one or more digital signal processors (DSP) 3207, or one or more application-specific integrated circuits (ASIC) 3209. A DSP 3207 typically is configured to process real-world signals (e.g., sound) in real time independently of the processor 3203. Similarly, an ASIC 3209 can be configured to performed specialized functions not easily performed by a general purposed processor. Other specialized components to aid in performing the inventive functions described herein comprises one or more field programmable gate arrays (FPGA) (not shown), one or more controllers (not shown), or one or more other special-purpose computer chips.

The processor 3203 and accompanying components have connectivity to the memory 3205 via the bus 3201. The memory 3205 includes both dynamic memory (e.g., RAM, magnetic disk, writable optical disk, etc.) and static memory (e.g., ROM, CD-ROM, etc.) for storing executable instructions that when executed perform the inventive steps described herein to provide real-time object tracking using outer and inner tracking. The memory 3205 also stores the data associated with or generated by the execution of the inventive steps.

While the invention has been described in connection with a number of various embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising:
means for using a first object tracking mechanism to detect and associate one or more objects from across frames of a video;
means for initiating one or more second object tracking mechanisms to track the one or more objects detected by the first object tracking mechanism across frames of the video in parallel with the first object tracking mechanism; and
means using a tracking output of the one or more second object tracking mechanisms in place of the first object tracking mechanism for a frame of the video based on determining that first object tracking mechanism has missed a detection of the object in the frame of the video,
wherein the first object tracking mechanism has missed the detection by failing to detect the object in the frame of the video.

2. The apparatus of claim 1, wherein the first object tracking mechanism is based on deep neural network (DNN)-based object tracking, and wherein the one or more second object tracking mechanisms are based on region of interest object (ROI) tracking.

3. The apparatus of claim 2, wherein a region of interest object (ROI) to be tracked by the ROI tracking is provided by the deep-neural network-based object tracking on the initiating of the ROI tracking.

4. The apparatus of any preceding claims 1-3, further comprising means for:
reinitiating the second object tracking mechanism based on a detection of the object by the first object tracking mechanism in a subsequent frame of the video.

5. The apparatus of any preceding claims 1-4, wherein a respective second object tracking mechanism of the one or more second object tracking mechanisms is respectively initiated for an individual object of the one or more objects.

6. The apparatus of any preceding claims 1-5, further comprising:
means for cropping the frame of the video based on a bounding box of the tracking output of the one or more second object tracking mechanisms; and
means for performing a re-identification of the one or more objects based on the cropped frame.

7. The apparatus of any preceding claims 1-6, further comprising means for:
resizing or cropping the frame for input to the one or more second object tracking mechanisms.

8. The apparatus of any preceding claims 1-7, further comprising means for:
generating a tracklet respectively for the one or more objects based on the first object tracking mechanism, the one or more second object tracking mechanisms, or a combination thereof,
wherein the tracklet is a sequence of detections across a plurality of frames of the video.

9. The apparatus of claim 8, further comprising means for:
classifying the tracklet as active, inactive, tracked, and/or fragmented based on the first object tracking mechanism, the one or more second object tracking mechanisms, or a combination thereof.

10. The apparatus of any proceeding claims 1-9 wherein the means comprises
at least one processor; and
at least one memory including computer program code, the at least one memory and computer program code configured to, with the at least one processor, cause a performance of the apparatus.

11. A method comprising:
using a first object tracking mechanism to detect and associate one or more objects across frames of a video;
initiating one or more second object tracking mechanisms to track the one or more objects detected by the first object tracking mechanism across frames of the video in parallel with the first object tracking mechanism; and
using a tracking output of the one or more second object tracking mechanisms in place of the first object tracking mechanism for a frame of the video based on determining that first object tracking mechanism has missed a detection of the object in the frame of the video,
wherein the first object tracking mechanism has missed the detection by failing to detect the object in the frame of the video.

12. The method of claim 11, wherein the first object tracking mechanism is based on deep neural network (DNN)-based object tracking, and wherein the one or more second object tracking mechanisms are based on region of interest object (ROI) tracking.

13. The method of claim 12, wherein the ROI to be tracked by the ROI object tracking is provided by the deep-neural network-based object tracker on the initiating of the ROI object tracking.

14. A computer program comprising instructions which, when executed by an apparatus, cause the apparatus to perform at least the following:
using a first object tracking mechanism to detect and associate one or more objects across frames of a video;
initiating one or more second object tracking mechanisms to track the one or more objects detected by the first object tracking mechanism across frames of the video in parallel with the first object tracking mechanism; and
using a tracking output of the one or more second object tracking for a frame of the video based on determining that first object tracking mechanism has missed a detection of the object in the frame of the video,
wherein the first object tracking mechanism has missed the detection by failing to detect the object in the frame.

15. The computer program of claim 14, wherein the first object tracking mechanism is based on deep neural network (DNN)-based object tracking, and wherein the one or more second object tracking mechanisms are based on region of interest object (ROI) tracking.
